# EUROPEAN PATENT APPLICATION

(11) **EP 4 848 185 A1**
(43) Date of publication of application: **02.12.2026**
(21) Application number: 25901507.1
(22) Date of filing: 05.12.2025
(51) Int. Cl.: G06Q 20/40

(54) **SETTLEMENT SYSTEM EMPLOYING VP TRANSACTION DETAILS AND DIGITAL CURRENCY SETTLEMENT PLATFORM, AND METHOD FOR SAME**

(30) Priority: 06.12.2024 JP 2024213877
(71) Applicant: Sumitomo Mitsui Banking Corporation, Tokyo 100-0005 (JP)
(72) Inventor: KUGA, Tomoya, Tokyo 100-0005 (JP); KIURA, Yoshiaki, Tokyo 100-0005 (JP)
(74) Representative: Bandpay & Greuter
(86) International application number: PCT/JP2025/042469
(87) International publication number: WO 2026/121313

(57) **Abstract**

A first settlement provider (140) on an issuer side issues a credential of a holder to a user terminal (110) as a VC. A digital ID wallet provider (115) issues an encrypted VP generated from the VC. A settlement terminal (170) on a member shop side requests a second settlement provider (160) on a verifier side to verify the encrypted VP. The second settlement provider provides a verification result of the encrypted VP to the settlement terminal. The settlement terminal requests the second settlement provider to perform settlement processing based on the verification result of the encrypted VP. The second settlement provider issues a settlement request so as to execute the settlement processing. A digital currency wallet provider (120) on the issuer side generates a settlement transaction based on the settlement request and transmits the settlement transaction to a digital currency settlement infrastructure (180).

## Description

### Technical Field

The present invention relates to a settlement service utilizing a transaction statement (including information of an invoice/a receipt and the like) as a verifiable presentation (VP) generated from a verifiable credential (VC). More specifically, the present invention relates to a settlement system and a method thereof to save the VP-converted transaction statement on a digital currency settlement infrastructure in a cashless settlement scene between a holder, an issuer, and a verifier associated with the VC.

### Background Art

As the filed of settlement services for various commercial transactions has advanced, settlement methods have also been evolved and diversified rapidly. Also, regarding digital currency, which is not paper money or coin but is currency used for electronic settlement, a central bank digital currency (CBDC), tokenized deposits (TD), a stablecoin (SC), and the like utilizing a distributed ledger technology (DLT) typified by blockchain (BC) have been put into practical use. On the above-described settlement infrastructure, intangible/tangible real-world assets or rights, such as stocks, bonds, real properties, art pieces, precious metal, and carbon credits, is expressed on the blockchain as a tokenized asset (TA).

Particularly, regarding the stablecoin that is a Fiat-Backed digital currency, an issuance amount has been significantly increased, and a scale and diversification of the tokenized asset as a distribution target have been expanded. Therefore, an infrastructure to realize a direct distribution via digital currency, that is, decentralized finance has been structured, and formation of an ecosystem of a new investment and currency has been developed. Thus, in the effort of the tokenization of assets, contents, rights, and the like, while the direct on-chain settlement and distribution have been available, there has been an expectation to make the already-existing financial function efficient or create a use case by a new financial function.

In a system of executing a contract automatically without a mediator in the above-described decentralized finance, which is called a smart contract, while there is a high advantage in convenience or the aspect of cost, it is also a situation with a high necessity to confirm predetermined conditions to-be satisfied for smooth negotiation or verification on the contract. For example, in PTL 1, a settlement system to execute the smart contract for the stablecoin as a highly liquid crypto-asset is disclosed.

### Citation List

### Patent Literature

PTL 1: Japanese Patent No. 7209984

### Summary of Invention

### Technical Problem

However, in the settlement system as disclosed in PTL 1, some problems are also pointed out, and a necessity for the following countermeasures arises. For example, in stablecoin settlement, only "payment is made when, by who, to whom, and how much" is registered on the blockchain; however, as a perspective of a regulatory authority side, from the aspect of anti-money laundering/countering the financing of terrorism (AML/CFT), it is desired to make it possible to match and verify payment information and transaction information associated therewith.

Additionally, from a perspective of a business operator side, in addition to the stablecoin settlement, it is desired to prepare an infrastructure that makes it possible to issue a conventional qualified invoice or qualified receipt in the invoice system. In addition, from a perspective of a user side, it is also desired in the stablecoin settlement to execute household budget management that makes it possible to cooperate with a tool typified by a household account book application.

The present invention is made to solve the above-described problems, and an object thereof is to provide a settlement system and a method thereof using a VP-converted transaction statement and a digital currency settlement infrastructure, which make it possible to perform on-chain DVP (Delivery Versus Payment) settlement on the digital currency settlement infrastructure, in which an invoice and a receipt on the invoice system is issued, validity and availability of the payment information and the transaction information are verified, and cooperation between the household budget management and a settlement result is executed. Solution to Problem

In order to solve the above-described problems, as an aspect of the present invention, a settlement system is to make it possible to make settlement of a sales contract between a holder and a member shop based on a verification result by a verifier for a credential provided from the holder in the member shop having a member shop contract with the verifier, as a settlement scene between an issuer having a business contract with a settlement brand, the holder who is a member of the settlement brand, and the verifier having a transaction contract with the settlement brand, and includes the following components:
(1) a first settlement provider disposed on an issuer side and configured to determine issuance to provide the credential to a user terminal used by the holder as a verifiable credential (VC) based on a request from the user terminal;
(2) a digital ID wallet provider configured to manage the VC issued from the first settlement provider based on an instruction from the user terminal and issue an encrypted verifiable presentation (VP) generated from the VC based on an instruction from the user terminal;
(3) a settlement terminal disposed in the member shop and configured to request settlement processing for the sales contract based on a verification result of the encrypted VP issued from the digital ID wallet provider;
(4) a second settlement provider disposed on a verifier side and configured to verify the VP provided from the settlement terminal and thereafter issue a settlement request so as to execute the settlement processing requested from the settlement terminal; and
(5) a first digital currency wallet provider disposed on the issuer side and configured to generate a settlement transaction based on the settlement request issued from the second settlement provider and transmit the settlement transaction to a digital currency settlement infrastructure.

Here, the settlement transaction is a transaction formed so that a transaction record of the sales contract associated with the encrypted VP and the transaction information accompanying the transaction record can be registered with the digital currency settlement infrastructure.

The present system further includes the following components:
(6) a second digital currency wallet provider configured as a part of an agent application for settlement service installed on the user terminal and configured to verify authenticity of the settlement transaction based on a signature request issued from the first digital currency wallet provider and approve a user signature of the holder based on a verification result of the settlement transaction.

Additionally, in the present system, the digital ID wallet provider is configured as a part of an agent application for settlement service installed on the user terminal and manages the VC by utilizing a secure element built in the user terminal, or is configured as a server disposed on the issuer side and manages the VC by utilizing a database in an external server separated from the server.

Moreover, in the present system, the first settlement provider is configured as a server group disposed on the issuer side, and the server group comprises a settlement provider, an identity confirmation provider, and a point member provider that are configured to issue a credit card account VC, an identity confirmation VC, and a point member VC associated with the holder to the digital ID wallet provider, respectively. In addition, the first digital currency wallet provider is configured to issue a wallet account VC associated with a digital currency account of the holder that is issued from the digital currency settlement infrastructure to the digital ID wallet provider.

Here, the digital ID wallet provider issues an electronic check to the second settlement provider as the encrypted VP via the user terminal, and the electronic check includes the wallet account VC, the identity confirmation VC, and the point member VC associated with the sales contract.

Additionally, in the present system, the second settlement provider issues an electronic invoice to the digital ID wallet provider as an encrypted VP, and the electronic invoice includes an identifier and a signature of the member shop, a settlement amount of the sales contract, purchase target data of the sales contract, an applicable tax rate and a consumption tax amount for the purchase target data, and an invoice business operator number.

Moreover, in the present system, the second settlement provider issues an electronic receipt to the digital ID wallet provider as an encrypted VP, and the electronic receipt includes an identifier and a signature of the member shop, a settlement amount of the sales contract, purchase target data of the sales contract, an applicable tax rate and a consumption tax amount for the purchase target data, and a qualified invoice business operator number.

Furthermore, in the present system, the digital currency settlement infrastructure is a settlement infrastructure to maintain an accurate financial transaction history based on a distributed ledger technology using blockchain, and the distributed ledger technology stores transaction histories, in the unit called block, linking them together as a single chain from past to present using a cryptographic techniques.

Additionally, in the present system, the digital currency settlement infrastructure is a platform to utilize a digital currency, including any one of a stablecoin, a central bank digital currency, or tokenized deposits, for settlement.

In addition, as an aspect of the present invention, a settlement method for executing settlement processing of a sales contract in a settlement system, which handles the sales contract between a holder and a member shop based on a verification result by a verifier for a credential provided from the holder in the member shop having a member shop contract with the verifier, as a settlement scene between an issuer having a business contract with a settlement brand, the holder who is a member of the settlement brand, and the verifier having a transaction contract with the settlement brand, comprises the following components:
(1) determining, in a first settlement provider disposed on an issuer side, issuance to provide the credential to a user terminal used by the holder as a verifiable credential (VC) based on a request from the user terminal;
(2) issuing, in a digital ID wallet provider that manages the VC issued from the first settlement provider based on an instruction from the user terminal, an encrypted verifiable presentation (VP) generated from the VC based on an instruction from the user terminal;
(3) requesting, in a settlement terminal disposed in the member shop, verification of the encrypted VP issued from the digital ID wallet provider;
(4) verifying, in a second settlement provider disposed on a verifier side, the VP provided from the settlement terminal and providing a verification result of the VP to the settlement terminal;
(5) requesting, in the settlement terminal, settlement processing for the sales contract based on a verification result of the VP provided from the second settlement provider;
(6) issuing, in the second settlement provider, a settlement request so as to execute the settlement processing requested from the settlement terminal; and
(7) generating, in a first digital currency wallet provider disposed on the issuer side, a settlement transaction based on the settlement request issued from the second settlement provider and transmitting the settlement transaction to a digital currency settlement infrastructure.

Here, the settlement transaction isa transaction formed so that a transaction record of the sales contract associated with the encrypted VP and the transaction information accompanying the transaction record can be registered the digital currency settlement infrastructure.

### Advantageous Effects of Invention

According to the present invention, it is possible to provide a service user, such as a business operator, a user, and a regulatory authority, and so on with on-chain DVP (Delivery Versus Payment) settlement, which makes it possible to provide transparency guaranteed of transaction contents and improvement of the convenience of a consumer, by saving a transaction record of a crypto-asset as a transaction and the accompanied transaction information on the same chain after the transaction information (invoice and receipt) is converted into a VP, on a digital currency settlement infrastructure.

### Brief Description of Drawings

A detailed understanding of embodiments disclosed herein can be obtained from the following descriptions exemplified in conjunction with the appended drawings.

[Fig. 1A] Fig. 1A is a configuration diagram illustrating topology of a settlement system according to an embodiment of the present invention.
[Fig. 1B] Fig. 1B is a diagram illustrating a configuration of a basic model associated with the settlement system illustrated in Fig. 1A.
[Fig. 1C] Fig. 1C is a configuration diagram illustrating an alternative configuration of the settlement system illustrated in Fig. 1A.
[Fig. 2A] Fig. 2A is a configuration diagram illustrating an internal configuration of a settlement provider of an issuer side server in the settlement system illustrated in Fig. 1A.
[Fig. 2B] Fig. 2B is a table illustrating a configuration example of credit card account VC data in the settlement provider illustrated in Fig. 2A.
[Fig. 3A] Fig. 3A is a configuration diagram illustrating an internal configuration of an identity confirmation provider of the issuer side server in the settlement system illustrated in Fig. 1A.
[Fig. 3B] Fig. 3B is a table illustrating a configuration example of identity confirmation VC data in the settlement provider illustrated in Fig. 3A.
[Fig. 4A] Fig. 4A is a configuration diagram illustrating an internal configuration of a point member provider of the issuer side server in the settlement system illustrated in Fig. 1A.
[Fig. 4B] Fig. 4B is a table illustrating a configuration example of point member VC data in the point member provider illustrated in Fig. 4A.
[Fig. 5A] Fig. 5A is a configuration diagram illustrating an internal configuration of a digital currency wallet provider of the issuer side server in the settlement system illustrated in Fig. 1A.
[Fig. 5B] Fig. 5B is a table illustrating a configuration example of wallet account VC data in the digital currency wallet provider illustrated in Fig. 5A.
[Fig. 6A] Fig. 6A is a configuration diagram illustrating an internal configuration associated with a digital ID wallet provider function of a holder side terminal in the settlement system illustrated in Fig. 1A.
[Fig. 6B] Fig. 6B is a table illustrating a configuration example of the wallet account VC data in the digital ID wallet provider illustrated in Fig. 6A.
[Fig. 7A] Fig. 7A is a configuration diagram illustrating an internal configuration of a digital ID wallet provider of the issuer side server in the settlement system illustrated in Fig. 1B.
[Fig. 7B] Fig. 7B is a table illustrating a configuration example of the wallet account VC data in the digital ID wallet provider illustrated in Fig. 7A.
[Fig. 8] Fig. 8 is a configuration diagram illustrating an internal configuration associated with a digital currency wallet provider function of the holder side terminal in the settlement system illustrated in Fig. 1A.
[Fig. 9A] Fig. 9A is a configuration diagram illustrating an internal configuration of a settlement provider of a verifier side server in the settlement system illustrated in Fig. 1A.
[Fig. 9B] Fig. 9B is a table illustrating each configuration example of the wallet account VC data (of settlement input data) and electronic invoice and electronic receipt VC data (of settlement output data) in the settlement provider illustrated in Fig. 9A.
[Fig. 10] Fig. 10 is a configuration diagram illustrating an internal configuration of a member shop side settlement terminal in the settlement system illustrated in Fig. 1A.
[Fig. 11A] Fig. 11A is a table illustrating a configuration example of a settlement VP as detailed data of a VP request (stablecoin settlement) in the settlement system illustrated in Fig. 1A.
[Fig. 11B] Fig. 11B is a table illustrating a configuration example of the settlement VP as detailed data of the VP request (credit card settlement) in the settlement system illustrated in Fig. 1A.
[Fig. 12] Fig. 12 is a flowchart illustrating a settlement process in the settlement system illustrated in Fig. 1A.
[Fig. 13] Fig. 13 is a cooperation diagram illustrating respective flows of difference data among various systems included in the settlement process illustrated in Fig. 12.

### Description of Embodiments

Hereinafter, embodiments of the present invention are described in detail with reference to the drawings. Note that, in the multiple drawings, the same reference numerals represent the same component, and repetition of the descriptions thereof is omitted. Additionally, although an acronym, such as a VC (verifiable credential) and a VP (verifiable presentation), is written hereinafter, it is not described again after the first appearance.

### [Topology of Settlement System]

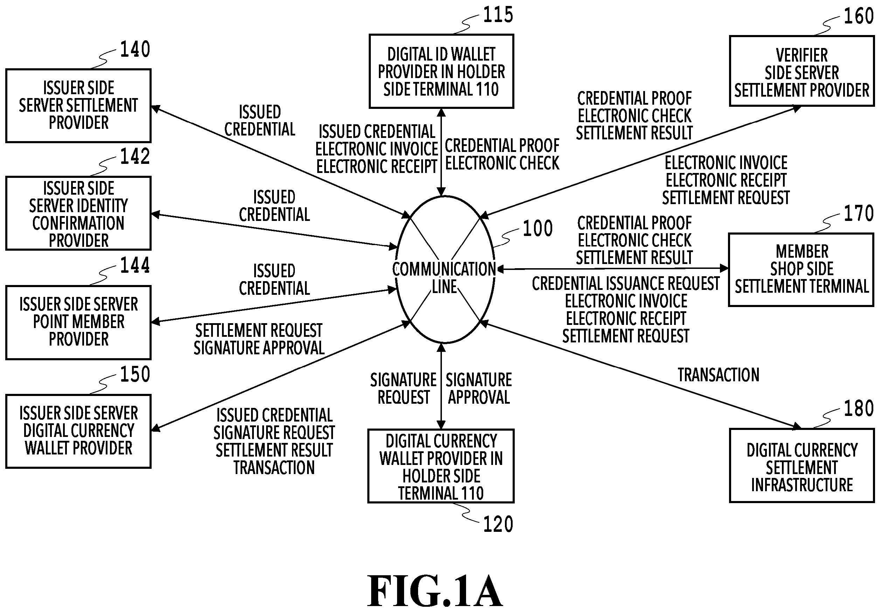

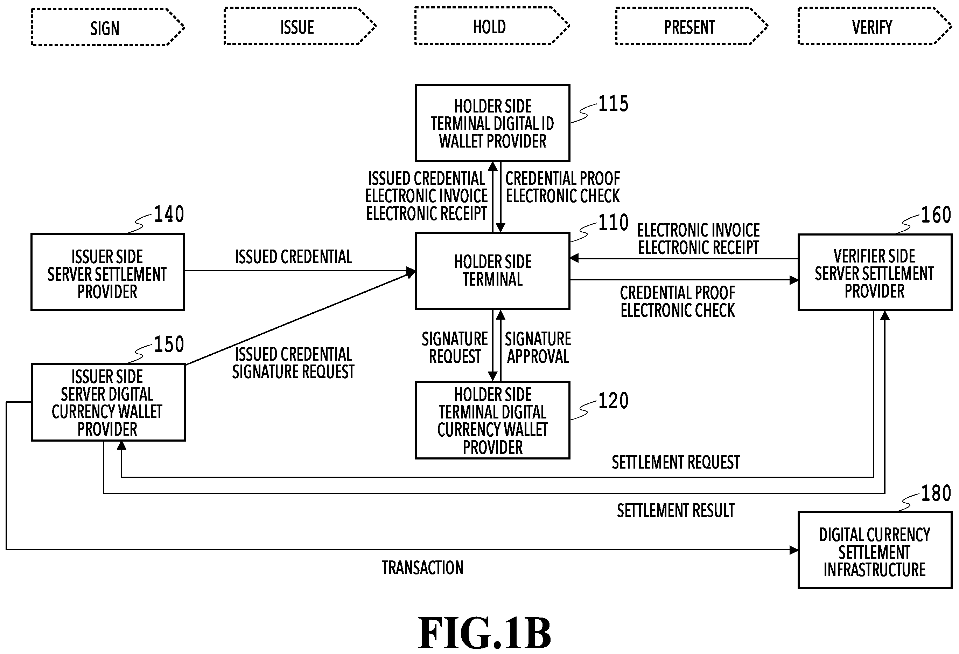

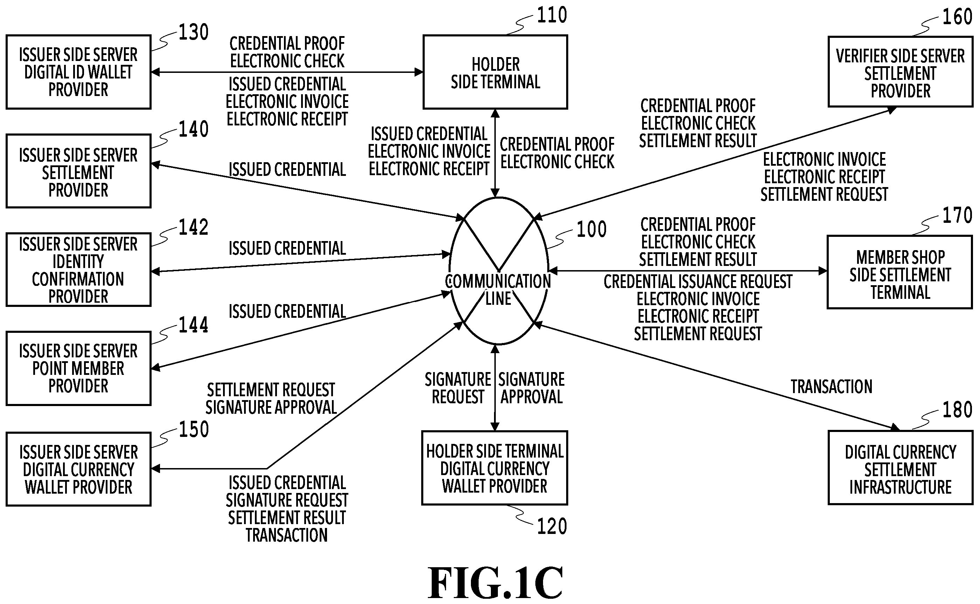

Fig. 1A is a configuration diagram illustrating topology of a settlement system according to an embodiment of the present invention. Additionally, Fig. 1B is a diagram illustrating a configuration of a basic model associated with the settlement system illustrated in Fig. 1A. In addition, Fig. 1C is a configuration diagram illustrating an alternative configuration of the settlement system illustrated in Fig. 1A.

As illustrated in Figs. 1A and 1C, a scene in a member shop (for example, a retail store and the like) having a member shop contract with a verifier (for example, a settlement agency and the like) having a transaction contract with at least one settlement organization of a variety of cashless settlement brands, in which a holder (customer) who is a member of that cashless settlement brand performs credential confirmation or identity confirmation along with a sales contract of a product in the store, a service, or the like or through the settlement processing associated with them, is assumed.

Particularly, at a preliminary stage of the settlement processing, in a case of performing the credential confirmation or the identity confirmation of the holder, once there is an operation on a user terminal 110 used by the holder, a credential proof issued by cooperation of issuer (for example, a financial organization and the like) side servers 140 to 150 is provided by the holder to a settlement terminal 170 on a member shop side via the user terminal 110. Thereafter, at a stage of the settlement processing, once the holder performs an input operation of settlement on the settlement terminal 170 under the support of a staff of the member shop, a settlement processing result in a verifier side server 160 is presented to the settlement terminal 170.

Here, the user terminal 110 of the holder is communicably connected to each of the issuer side servers 140 to 150 wirelessly via a communication line 100. Additionally, the settlement terminal 170 on the member shop side is communicably connected to the verifier side server 160 wirelessly or by wire via the communication line 100. Note that, the communication line 100 may be, for example, a public line type network that implements telephone communication, data communication, and the like or may be a network including as a part thereof a dedicated line type network that communicably connects only specific systems in a limited manner. Note that, although the user terminal 110 of the holder is a smartphone in both Figs. 1A and 1C, a part of the function configurations is different.

The user terminal 110 in the one, Fig. 1A, holds each function of a digital ID wallet provider 115 and a digital currency wallet provider 120 therein in the form of an application. Particularly, as for the two functions, a relatively high security function against the outside world in a settlement scene in cooperation with application software installed as an agent application for settlement service, which is implemented by storing an encrypted VC, an encryption key, and a decryption key of the holder, and a public key and a private key of a digital currency account of the holder into a security IC chip called a secure element (SE), is provided. Note that, in a case of using a public biometric infrastructure (PBI) for key management, management of the private key utilizing the secure element is unnecessary.

The user terminal 110 in the other, Fig. 1C, holds the function of the digital currency wallet provider 120 in the form of an application, but does not hold the function of the digital ID wallet provider. Instead, as for the function of the digital ID wallet provider, a function similar to that of the digital ID wallet provider 115 of the user terminal 110 in Fig. 1A is implemented alternatively by transmitting and receiving data associated with a similar function to and from a digital ID wallet provider 130 in an external issuer side server group.

Here, the digital currency wallet provider 120 in the user terminal 110 in Figs. 1A and 1C has a relatively high security function against the outside world for an information asset, so as to store and update the public key (a wallet account number, a trade account number, or the like) and the private key (PIN (Personal Identification Number), a password, or the like of a wallet account or a trade account) of the digital currency account according to an instruction of the holder and verify a user signature key according to a request of the issuer side server. Additionally, a digital ID wallet 115 in the user terminal 110 in Fig. 1A and a digital ID wallet 130 of the issuer side server in Fig. 1C have a relatively high security function against the outside world for the information asset, so as to store and update the encrypted VC and the decryption key of the holder and update the encrypted VC according to the instruction of the holder or the request of the issuer side server. Note that, the decryption key (public key) of the holder is, for example, generated from the encryption key (private key) based on an elliptic curve cryptography method and the like.

On the other hand, a digital currency wallet provider 150 of the issuer side server in Figs. 1A and 1C handles a balance on a blockchain network of the digital currency settlement infrastructure 180 and transmits a settlement transaction to a digital currency settlement infrastructure 180, so as to execute reflection of a settlement result to the wallet account of the holder according to the instruction of the holder. Note that, a transaction on online settlement indicates a unit of gathered pieces of processing required to perform a single sales transaction.

In addition, the user terminal 110 of the holder makes it possible to transmit and receive various data required for the settlement processing in a state of being close to but without contacting the settlement terminal 170 on the member shop side based on a communication function, such as near field communication (NFC) standards. Additionally, in a case of activating the agent application for settlement service, as password-less authentication, identity confirmation for biological information of the holder is executed based on a FIDO (Fast Identity Online) authentication method and the like.

Additionally, respective components 130 to 150 of the issuer side server group are operated by the financial organization, such as a bank and a settlement company, that has a business contract with at least one of the cashless settlement brands and manages the credential of the holder who is the member of the cashless settlement brand. Note that, as for a crypto-asset wallet, in a case of assuming a management entrustment type wallet (Custodial Wallet), the issuer side server group holds and manages the encryption key, the decryption key, and the like of the holder. On the other hand, in a case of assuming a self-managed type wallet (Non-custodial Wallet), since the encryption key of the holder is managed by only the holder himself/herself, the encryption key is not held by the issuer side server group.

Here, a settlement provider 140, an identity confirmation provider 142, a point member provider 144, and the digital currency wallet provider 150 in the issuer side server group manage targets of the VC conversion that are, for example, credit account information, identity confirmation information, and point member information, and wallet account information, respectively, as the credential of the holder and the digital currency account, and issue respective encrypted VCs, that is, a credit account VC, an identity confirmation VC, a point member VC, and a wallet account VC to the digital ID wallet 115 in the user terminal 110 or the digital ID wallet 130 on the issuer side, respectively, according to a request from the user terminal 110 of the holder. Note that, as an example of the above-described VC, a student VC, an employee VC, a parenting VC, and the like may be additionally included, and management and issuance are performed similarly.

Here, the encryption key of the holder is, for example, based on a decentralized identifier (DID) generated by functional transformation of the biological information of the holder, such as a fingerprint, an iris, a voiceprint, an auricle feature, a facial surface feature, and a vein pattern. Note that, the DID of the holder is held so as to be different for each of various settlement services between the cashless settlement brand, the issuer, and the holder, and occurrence of the association of the VC/VP between the multiple settlement services is avoided.

Additionally, a settlement provider 160 of the verifier side server plays a part of a settlement flow related to the holder and the settlement organization via the member shop side settlement terminal 170 based on the conclusion of the transaction contract by the settlement agency with the settlement organization belonging to at least one of a variety of cashless settlement brands. Here, the settlement provider 160 transmits a result of the settlement processing by the corresponding settlement organization to the settlement terminal 170 in response to a settlement request received from the settlement terminal 170.

Moreover, the member shop side settlement terminal 170 is a settlement terminal that is disposed in the member shop concluding the member shop contract with a member shop management company and supports the settlement for the holder who is the customer to perform a purchase transaction of the product, the service, or the like so as to correspond to various types of cashless settlement processing in a case of accounting processing of a retail sales transaction performed in the store. Particularly, it is possible to display, for example, various types of information before and after the settlement or various types of information before and after the identity confirmation, the credential confirmation, and the like on a screen display for the customer implemented on the settlement terminal 170 as an operation panel function.

Particularly, the types of cashless settlement assumed herein include card settlement, electronic money settlement, code settlement, stablecoin settlement, and the like. In the card settlement, reading of a card itself based on a credit card, a prepaid card, a debit card, or the like presented by the holder as the customer or reading via a smartphone or the like is performed on the settlement terminal 170.

In addition, a token distributed on the digital currency settlement infrastructure 180 is a stablecoin based on a distributed ledger technology using blockchain. Here, the distributed ledger technology using the blockchain indicates a technology intending to maintain accurate financial transaction history based on management and sharing of the same ledger (database) by respective participants (computers) on a network by storing transaction histories, in the unit called block, linking them together as a single chain from past to present using a cryptographic techniques. Additionally, the stablecoin is a digital currency (virtual currency) designed such that the price thereof is pegged to legal currency, a commodity (a product such as precious metal or industrial metal), or the like traded in a market and has a feature of excellent price stability by the presence of a central manager. Note that, the digital currency settlement infrastructure 180 is also applicable to a platform to utilize other digital currency for the settlement, such as a central bank digital currency or tokenized deposits, in addition to the stablecoin.

### [Model Configuration of Settlement System]

Fig. 1B is a diagram illustrating a configuration of a basic model associated with the settlement system illustrated in Fig. 1A. As illustrated in Fig. 1B, the verifiable credential (VC) is utilized by a corresponding component in various scenes including signing (Sign), issuance (Issue), storing (Store), presentation (Present), and verification (Verify). Note that, the issuer is a company who issues the credential to the holder, the holder is an individual or a company who manages the issued credential and presents the credential to the verifier, and the verifier is a company who verifies the authenticity of the credential.

Here, the credential is, for example, formed as follows. That is, (1) information associated with identification of a subject of the credential (for example, an identification number and the like of the subject), (2) information associated with an issuance organization (for example, an identification number and the like of the financial organization), (3) information associated with a type of the credential (for example, the credit card, an electronic currency wallet, and the like), (4) information associated with a specific attribute or characteristic asserted by the issuance organization about the subject (for example, a birth date, an address, and the like), (5) an evidence associated with a derivation method of the credential (for example, My Number Card and the like), (6) information associated with restriction of the credential (for example, a validity period, use conditions, and the like), and the like are included.

To be more specific, the VC issued from the settlement provider 140 and the digital currency wallet provider 150 of the issuer side server to the holder side is stored into the secure element, which is a verifiable data registry, by the digital ID wallet provider 115 in the user terminal 110 possessed by the holder. Here, the issuer side server forms the encrypted VC based on different encryption keys after applying different electronic signatures (for example, a digital signature based on a public key cryptosystem and the like) to each individual information (Claim) included in the credential.

In the settlement scene, in a case where the settlement provider 160 of the verifier side server transmits an electronic invoice to the user terminal 110 to request the VP of the holder, the digital ID wallet provider 115 in the user terminal 110 transmits an electronic check (including the wallet account VC, the identity confirmation VC, the point member VC, and the like) to the settlement provider 160 to give the credential proof by the encrypted VP generated from the encrypted VC in the data registry. Note that, as for the credential required for the verification of the VC, in order to present only the minimal credential associated with the holder to the verifier, that is, in order to generate the optimal VP from the presentable VC, for example, a technique such as a zero-knowledge proof (ZKP) is applied.

In this case, the verifier side verifies the legitimacy of the credential proof by using the decryption key of the holder for the already-provided VC. The verification contents are, for example, formed as follows. That is, (1) confirming the issuer of the credential proof, (2) confirming the holder (Owner) of the credential that is a source of the credential proof, (3) confirming the individual information (Claim) included in the credential, (4) the unexpired credential (an expiration date of the credential is not expired), and the like are included.

Subsequently, in a case where the settlement provider 160 of the verifier side server transmits the settlement request to the issuer side server, the digital currency wallet provider 150 of the issuer side server generates the settlement transaction and thereafter transmits a signature request for the settlement transaction to the user terminal 110 of the holder. Thereafter, the digital currency wallet provider 120 in the user terminal 110 transmits signature approval to the digital currency wallet provider 150.

Subsequently, in a case where the digital currency wallet provider 150 of the issuer side server transmits a settlement approval result to the verifier side server, the settlement provider 160 of the verifier side server transmits the electronic receipt (including a receipt VP and the like) to the user terminal 110 of the holder in order to complete the settlement by the encrypted VP. On the other hand, in a case where the digital currency wallet provider 150 of the issuer side server transmits the settlement transaction to the digital currency settlement infrastructure 180, the digital currency settlement infrastructure 180 registers the payment information and the transaction information associated therewith as the settlement transaction in the form of a block on the blockchain.

### [Internal Configuration of Settlement Provider of Issuer Side Server]

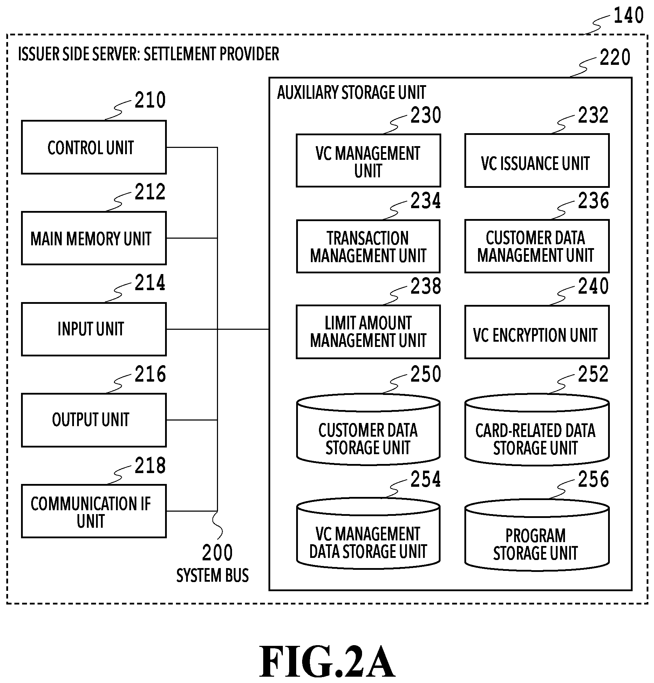

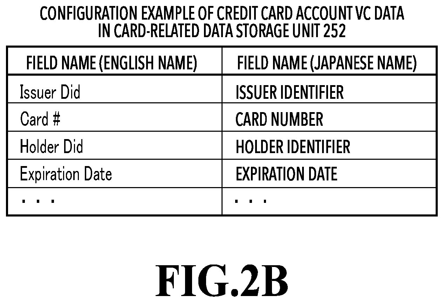

Fig. 2A is a configuration diagram illustrating an internal configuration of the settlement provider 140 of the issuer side server in the settlement system illustrated in Fig. 1A. Fig. 2B is a table illustrating a configuration example of credit card account VC data stored in a card-related data storage unit 252 in the settlement provider 140 illustrated in Fig. 2A.

As illustrated in Fig. 2A, the settlement provider 140 of the issuer side server is configured similarly to a computer for use as a common server, which supports processing functions related to duties to manage settlement information in the credential of the holder and determines the issuance to provide the credential to the user terminal 110 as the VC. To be more specific, in the settlement provider 140, a control unit 210, a main memory unit 212, an input unit 214, an output unit 216, a communication IF (Interface) 218, and an auxiliary storage unit 220 are communicably connected to each other via a system bus 200.

In the inside of the auxiliary storage unit 220, a VC management unit 230, a VC issuance unit 232, a transaction management unit 234, a customer data management unit 236, a limit amount management unit 238, and a VC encryption unit 240 are each included. In a case where programs held in the components are loaded into the main memory unit 212 based on a calling instruction from the control unit 210, each application program structured by the loading executes processing of various computations that handle processing of various data related to the VC management and issuance.

Additionally, in the inside of the auxiliary storage unit 220, a customer data storage unit 250, the card-related data storage unit 252, a VC management data storage unit 254, and a program storage unit 256 are each included. In a case where data and programs saved in the components are loaded into the main memory unit 212 based on the calling instruction of the control unit 210, sub systems structured by the loading are used for processing of various computations that manage the data, the program, and the like in the form of a file/database.

The control unit 210 functions as a central processing unit (CPU), executes control of an operation and computation of data for an individual system component, and particularly executes various computations by loading the data and the program stored in the auxiliary storage unit 220 into the main memory unit 212. The main memory unit 212 functions as a main memory, stores various data and programs, a computer-executable command, and the like inputted from the input unit 214, the communication IF unit 218, the auxiliary storage unit 220, and the like based on the instruction of the control unit 210, saves data that is obtained after the computation processing performed on the above into the inside, and provides the data to the outside via the output unit 216.

The input unit 214 provides an interface that receives various commands and data (for example, various master data, data of tables, and the like) inputted from a system operator. The output unit 216 provides an interface that generates output data to display the data on which various types of processing are already performed on the operator, output data to print that data, and the like. The communication IF unit 218 provides an interface that functions in a case of transmitting and receiving various data to and from the user terminal 110 of the holder, the digital currency wallet provider 150 of the issuer side server, and the settlement provider 160 of the verifier side server, and another internal system and apparatus and the like.

Here, each embodiment as a server configuration of the settlement provider 140 of the issuer side server may be a configuration that functions as a single system construct. Therefore, as an example of the embodiment, the settlement provider 140 may be arranged inside a server computer that is a single body, may be formed such that respective system components are parallel-distributed in the form of multiple groups of units, or may be formed such that multiple server computers are combined to share the data and the program.

More specifically, the VC management unit 230 performs management, such as generation, updating, and canceling, of the VC-converted credential of the holder and stores relevance information thereof into the VC management data storage unit 254. The VC issuance unit 232 issues the VC-converted credential of the holder to the user terminal 110. The transaction management unit 234 manages execution of a series of indivisible processing that is required for the above-described VC management or VC issuance and stores a processing result thereof into the card-related data storage unit 252. The customer data management unit 236 manages the credential and the encryption key of the holder (for example, the private key based on the public key cryptosystem and the like) and stores relevance information thereof into the customer data storage unit 250.

Additionally, the limit amount management unit 238 performs management, such as setting, updating, and canceling, of a credit limit amount based on credit management for the holder and stores relevance information thereof into the customer data storage unit 250. The VC encryption unit 240 uses the encryption key of the holder saved in the customer data storage unit 250 for the credential of the holder saved in the card-related data storage unit 252 and passes the generated encrypted VC to the VC issuance unit 232. The program storage unit 256 stores programs to execute a series of processing executed as the transaction, other individual processing, or the like and receives calling for the programs from the control unit 210.

Note that, a customer data storage unit 350 stores, for example, a customer ID, a full name, an address, a phone number, an e-mail address, gender, a birth date, a debit account, an occupation, a post, annual income, a family structure, and so on as registration information of the holder who is the customer. The VC management data storage unit stores a credential ID, a customer ID, an issuer ID, a changing state, a changing date and time, an expiration date, and so on as transition information of the credential of the holder.

Here, in a case where the issuer is a credit company, and the holder uses the credit card, the card-related data storage unit 252 holds, for example, an issuer identifier, a card number, a holder identifier, an expiration date, and so on as a data configuration of the credit card account VC illustrated in Fig. 2B.

### [Internal Configuration of Identity Confirmation Provider of Issuer Side Server]

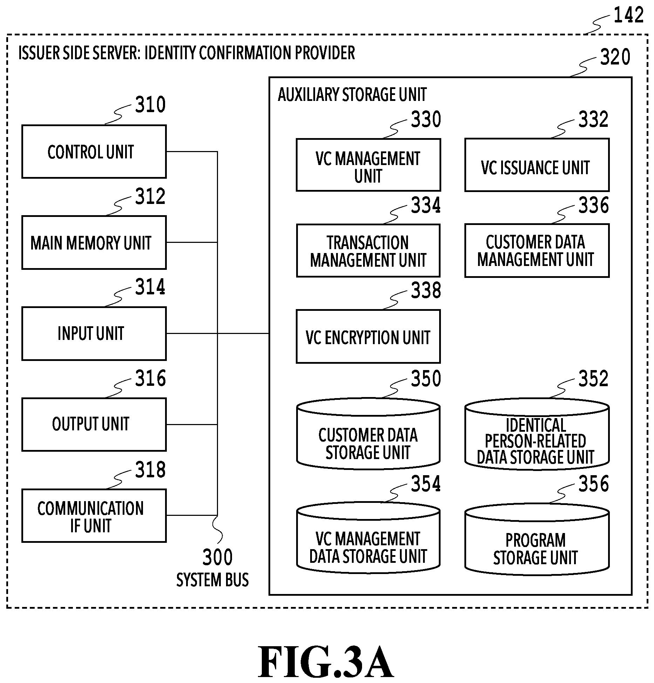

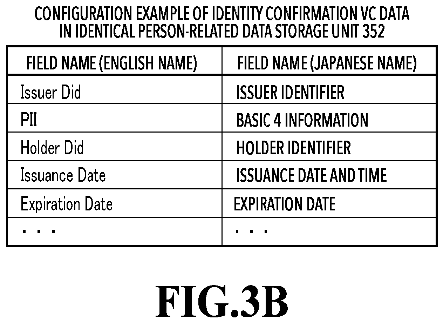

Fig. 3A is a configuration diagram illustrating an internal configuration of the identity confirmation provider 142 of the issuer side server in the settlement system illustrated in Fig. 1A. Fig. 3B is a table illustrating a configuration example of identity confirmation VC data stored in an identical person-related data storage unit 352 in the identity confirmation provider 142 illustrated in Fig. 3A.

As illustrated in Fig. 3A, the identity confirmation provider 142 of the issuer side server is configured similarly to a computer for use as a common server, which supports processing functions related to duties to manage identity confirmation information in the credential of the holder and determines the issuance to provide the credential to the user terminal 110 as the VC. To be more specific, in the identity confirmation provider 142, a control unit 310, a main memory unit 312, an input unit 314, an output unit 316, a communication IF 318, and an auxiliary storage unit 320 are communicably connected to each other via a system bus 300. Note that, the components operate basically similarly to the respective components of the settlement provider 140; for this reason, details are not described again.

In the inside of the auxiliary storage unit 320, a VC management unit 330, a VC issuance unit 332, a transaction management unit 334, a customer data management unit 336, and a VC encryption unit 338 are each included. In a case where programs held in the components are loaded into the main memory unit 312 based on a calling instruction from the control unit 310, each application program structured by the loading executes processing of various computations that handle processing of various data related to the VC management and issuance.

Additionally, in the inside of the auxiliary storage unit 320, the customer data storage unit 350, the identical person-related data storage unit 352, a VC management data storage unit 354, and a program storage unit 356 are each included. In a case where data and programs saved in the components are loaded into the main memory unit 312 based on the calling instruction of the control unit 310, sub systems structured by the loading are used for processing of various computations that manage the data, the program, and the like in the form of a file/database.

More specifically, the VC management unit 330 performs management, such as generation, updating, and canceling, of the VC-converted credential of the holder and stores relevance information thereof into the VC management data storage unit 354. The VC issuance unit 332 issues the VC-converted credential of the holder to the user terminal 110. The transaction management unit 334 manages execution of a series of indivisible processing that is required for the above-described VC management or VC issuance and stores a processing result thereof into the identical person-related data storage unit 352. The customer data management unit 336 manages the credential of the holder and stores relevance information thereof into the customer data storage unit 350.

Additionally, VC encryption unit 338 uses the encryption key of the holder saved in the customer data storage unit 350 for the credential of the holder saved in the identical person-related data storage unit 352 and passes the generated encrypted VC to the VC issuance unit 332. The program storage unit 356 stores programs to execute a series of processing executed as the transaction, other individual processing, or the like and receives calling for the programs from the control unit 310.

Here, the identical person-related data storage unit 352 holds, for example, an issuer identifier, basic four types of information (a full name, gender, a birth date, and an address), a holder identifier, an issuance date and time, an expiration date, and so on as a data configuration of the identity confirmation VC illustrated in Fig. 3B.

### [Internal Configuration of Point Member Provider of Issuer Side Server]

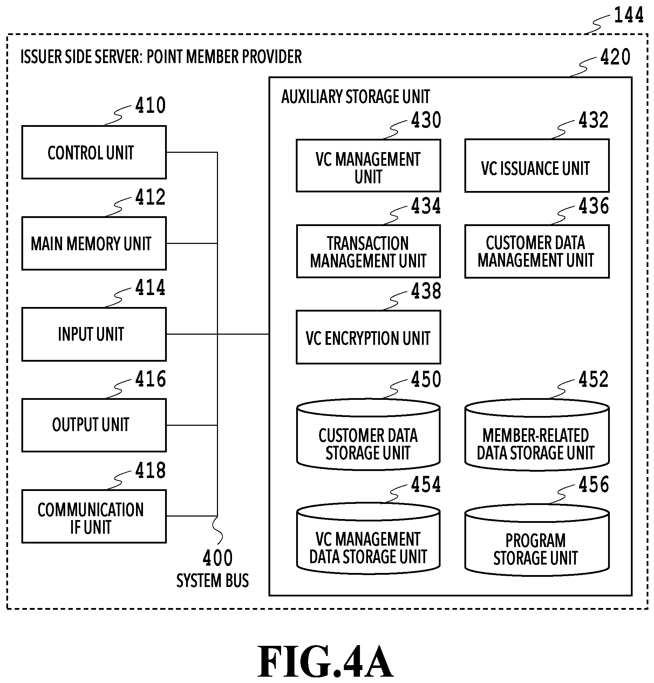

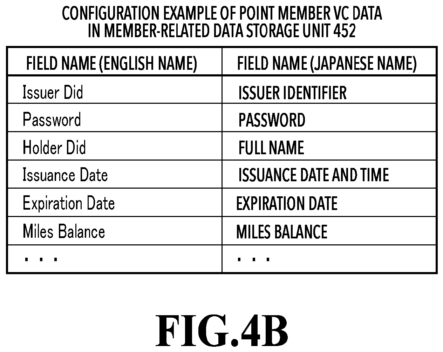

Fig. 4A is a configuration diagram illustrating an internal configuration of the point member provider 144 of the issuer side server in the settlement system illustrated in Fig. 1A. Fig. 4B is a table illustrating a configuration example of point member VC data stored in a member-related data storage unit 452 in the point member provider 144 illustrated in Fig. 4A.

As illustrated in Fig. 4A, the point member provider 144 of the issuer side server is configurated similarly to a computer for use as a common server, which supports processing functions related to duties to manage point member information in the credential of the holder and determines the issuance to provide the credential to the user terminal 110 as the VC. To be more specific, in the point member provider 144, a control unit 410, a main memory unit 412, an input unit 414, an output unit 416, a communication IF 418, and an auxiliary storage unit 420 are communicably connected to each other via a system bus 400. Note that, the components operate basically similarly to the respective components of the settlement provider 140; for this reason, details are not described again.

In the inside of the auxiliary storage unit 420, a VC management unit 430, a VC issuance unit 432, a transaction management unit 434, a customer data management unit 436, and a VC encryption unit 438 are each included. In a case where programs held in the components are loaded into the main memory unit 412 based on a calling instruction from the control unit 410, each application program structured by the loading executes processing of various computations that handle processing of various data related to the VC management and issuance.

Additionally, in the inside of the auxiliary storage unit 420, a customer data storage unit 450, the member-related data storage unit 452, a VC management data storage unit 454, and a program storage unit 456 are each included. In a case where data and programs saved in the components are loaded into the main memory unit 412 based on the calling instruction of the control unit 410, sub systems structured by the loading are used for processing of various computations that manage the data, the program, and the like in the form of a file/database.

More specifically, the VC management unit 430 performs management, such as generation, updating, and canceling, of the VC-converted credential of the holder and stores relevance information thereof into the VC management data storage unit 454. The VC issuance unit 432 issues the VC-converted credential of the holder to the user terminal 110. The transaction management unit 434 manages execution of a series of indivisible processing that is required for the above-described VC management or VC issuance and stores a processing result thereof into the member-related data storage unit 452. The customer data management unit 436 manages the credential of the holder and stores relevance information thereof into the customer data storage unit 450.

Additionally, the VC encryption unit 438 uses the encryption key of the holder saved in the customer data storage unit 450 for the credential of the holder saved in the member-related data storage unit 452 and passes the generated encrypted VC to the VC issuance unit 432. The program storage unit 456 stores programs to execute a series of processing executed as the transaction, other individual processing, or the like and receives calling for the programs from the control unit 410.

Here, the member-related data storage unit 452 holds, for example, an issuer identifier, a password, a full name, an issuance date and time, an expiration date, a miles balance, and so on as a data configuration of the point member VC illustrated in Fig. 4B.

### [Internal Configuration of Digital Currency Wallet Provider of Issuer Side Server]

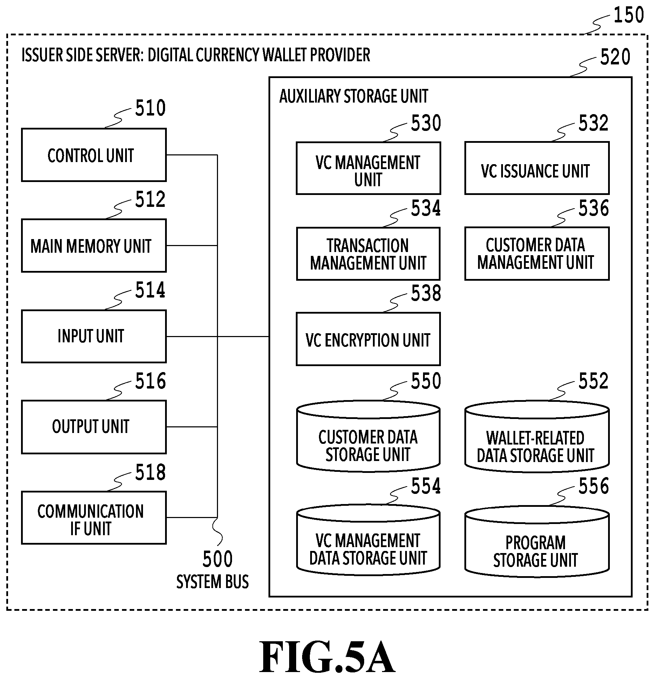

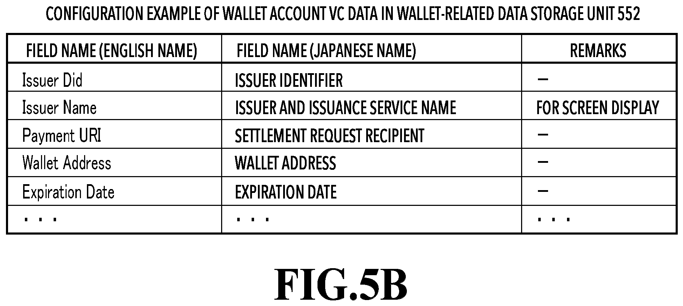

Fig. 5A is a configuration diagram illustrating an internal configuration of the digital currency wallet provider 150 of the issuer side server in the settlement system illustrated in Fig. 1A. Fig. 5B is a table illustrating a configuration example of wallet account VC data stored in a wallet-related data storage unit 552 in the digital currency wallet provider 150 illustrated in Fig. 5A.

As illustrated in Fig. 5A, the digital currency wallet provider 150 of the issuer side server is configurated similarly to a computer for use as a common server, which supports processing functions related to duties to manage wallet account information in the credential of the holder and determines the issuance to provide the credential to the user terminal 110 as the VC. To be more specific, in the digital currency wallet provider 150, a control unit 510, a main memory unit 512, an input unit 514, an output unit 516, a communication IF 518, and an auxiliary storage unit 520 are communicably connected to each other via a system bus 500. Note that, the components operate basically similarly to the respective components of the settlement provider 140; for this reason, details are not described again.

In the inside of the auxiliary storage unit 520, a VC management unit 530, a VC issuance unit 532, a transaction management unit 534, a customer data management unit 536, and a VC encryption unit 538 are each included. In a case where programs held in the components are loaded into the main memory unit 512 based on a calling instruction from the control unit 510, each application program structured by the loading executes processing of various computations that handle processing of various data related to the VC management and issuance.

Additionally, in the inside of the auxiliary storage unit 520, a customer data storage unit 550, the wallet-related data storage unit 552, a VC management data storage unit 554, and a program storage unit 556 are each included. In a case where data and programs saved in the components are loaded into the main memory unit 512 based on the calling instruction of the control unit 510, sub systems structured by the loading are used for processing of various computations that manage the data, the program, and the like in the form of a file/database.

More specifically, the VC management unit 530 performs management, such as generation, updating, and canceling, of the VC-converted credential of the holder and stores relevance information thereof into the VC management data storage unit 554. The VC issuance unit 532 issues the VC-converted credential of the holder to the user terminal 110. The transaction management unit 534 manages execution of a series of indivisible processing that is required for the above-described VC management or VC issuance and stores a processing result thereof into the wallet-related data storage unit 552. The customer data management unit 536 manages the credential of the holder and stores relevance information thereof into the customer data storage unit 550. Note that, as for the crypto-asset wallet, in a case of assuming the management entrustment type wallet, the digital currency wallet provider 150 stores the encryption key, the decryption key, and the like of the holder into the customer data storage unit 550 and holds and manages the above. On the other hand, in a case of assuming the self-managed type wallet, since the encryption key of the holder is managed by only the holder himself/herself, the encryption key is not held by the digital currency wallet provider 150.

Additionally, the VC encryption unit 538 uses the encryption key of the holder for the credential of the holder saved in a member-related data storage unit 552 and passes the generated encrypted VC to the VC issuance unit 532. The program storage unit 556 stores programs to execute a series of processing executed as the transaction, other individual processing, or the like and receives calling for the programs from the control unit 510. Note that, in a case of assuming the management entrustment type wallet, the generation of the encrypted VC by the VC encryption unit 538 is performed by using the encryption key of the holder saved in the customer data storage unit 550; however, on the other hand, in a case of assuming the self-managed type wallet, the generation of the encrypted VC by the VC encryption unit 538 is performed by using the encryption key of the holder saved in the user terminal 110.

Here, the wallet-related data storage unit 552 holds, for example, an issuer identifier, an issuer and issuance service name, a settlement request recipient, a wallet address, an expiration date, and so on as a data configuration of the wallet account VC illustrated in Fig. 5B.

### [Internal Configuration Related to Digital ID Wallet Provider Function of Holder Side User Terminal]

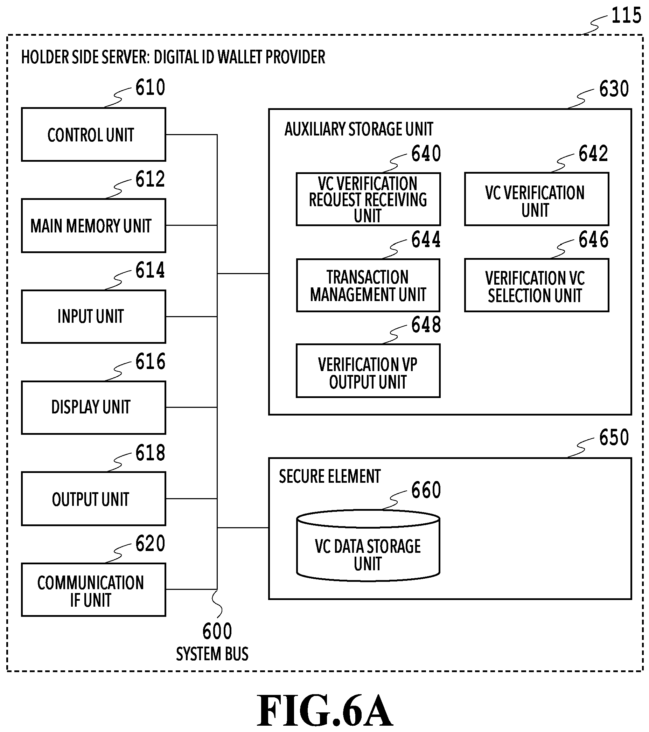

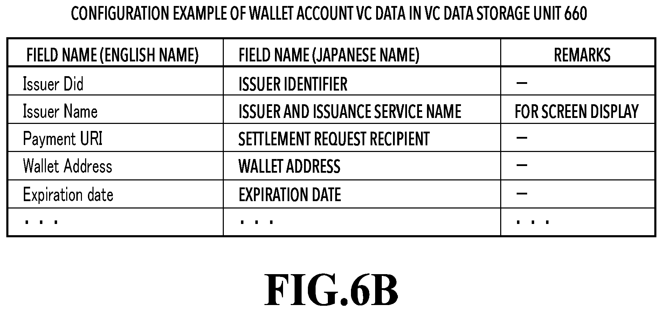

Fig. 6A is a configuration diagram illustrating an internal configuration related to a function of the digital ID wallet provider 115 of the holder side user terminal 110 in the settlement system illustrated in Fig. 1A. Fig. 6B is a table illustrating a configuration example of the wallet account VC data stored in a VC data storage unit 660 in a secure element 650 of the user terminal 110 illustrated in Fig. 6A. Here, the digital ID wallet provider 115 and the digital currency wallet provider 120 are formed as applications installed on the user terminal 110.

As illustrated in Fig. 6A, the user terminal 110 is configured as a general-purpose mobile computer similarly to a common smartphone, which manages the biological information of the holder and plays a part of the VC provision and the settlement processing through the issuer side servers 140 to 150, the settlement provider 160 of the verifier side server, and the member shop side settlement terminal 170.

To be more specific, in the user terminal 110, a control unit 610, a main memory unit 612, an input unit 614, a display unit 616, an output unit 618, a communication IF 620, an auxiliary storage unit 630, and the secure element 650 are communicably connected to each other via a system bus 600. Except the display unit 616 and the secure element 650, the components operate basically similarly to the respective components of the issuer side servers 140 to 150; for this reason, details are not described again.

Note that, the display unit 616 displays an instruction received from the holder or information that requires confirmation by the holder on a screen display. The secure element 650 includes a storage region and an encryption application programming interface (API) and is formed to store or generate the encryption key, the decryption key, and the encrypted VC of the holder.

In the inside of the auxiliary storage unit 630, a VC verification request receiving unit 640, a VC verification unit 642, a transaction management unit 644, a verification VC selection unit 646, and a verification VP output unit 648 are each included. In a case where programs held in the components are loaded into the main memory unit 612 based on a calling instruction from the control unit 610, each application program structured by the loading executes processing of various computations that handle processing of various data related to the VC management and issuance.

More specifically, in a case where the VC verification request receiving unit 640 receives the request of the settlement VC from the member shop side settlement terminal 170, the VC verification request receiving unit 640 receives the request as a request of settlement VC verification and outputs a settlement VP generated by the verification VC selection unit 646 to a VP-for-verification output unit 648. The VP-for-verification output unit 648 outputs the settlement VP to a communication IF unit 620 in order to transmit the settlement VP to the settlement terminal 170. The VC verification unit 642 generates the private key from the biological information of the holder taken as the biological authentication and verifies the legitimacy of the holder by matching the public key additionally generated from the private key and the public key provided from the secure element 650. In addition, the VC verification unit 642 verifies the legitimacy of the electronic signature corresponding to the encrypted VC provided from the secure element 650.

Additionally, the transaction management unit 644 manages execution of a series of indivisible processing that is required for the VC verification and stores a processing result thereof into the VC data storage unit 660 in the secure element 650. The verification VC selection unit 646 generates the settlement VP by selecting the credential included in the settlement VC while limiting the credential to the minimum required according to the settlement VC requested from the member shop side settlement terminal 170.

In addition, in the inside of the secure element 650, the VC data storage unit 660 is included. The VC data storage unit 660 stores, for example, a credential ID, a customer ID, an issuer ID, an encrypted VC, an electronic signature, a public key, a changing state, a changing date and time, an expiration date, and so on as the VC of the holder. Here, the VC data storage unit 660 holds, for example, an issuer identifier, an issuer and issuance service name, a settlement request recipient, a wallet address, an expiration date, and so on as a data configuration of the wallet account VC illustrated in Fig. 6B.

### [Each Internal Configuration of Digital ID Wallet Provider of Holder Side User Terminal and Issuer Side Server]

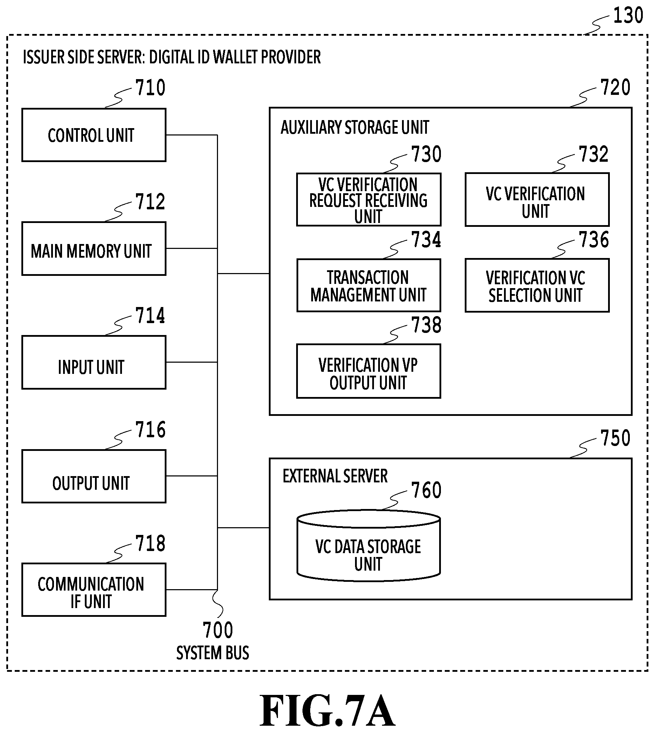

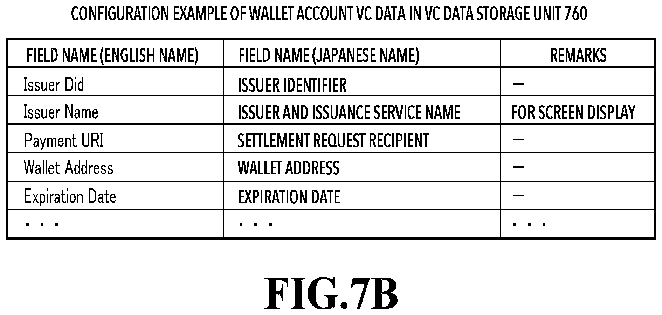

Fig. 7A is a configuration diagram illustrating an internal configuration of the digital ID wallet provider 130 of the issuer side server in the settlement system illustrated in Fig. 1C. Fig. 7B is a table illustrating a configuration example of the wallet account VC data stored in a VC data storage unit 760 in an external server 750 connected to the digital ID wallet provider 130 illustrated in Fig. 7A. Here, the digital currency wallet provider 120 is formed as an application installed on the user terminal 110; however, the digital ID wallet provider 130 is formed as a component of the issuer side server and functions as a Web browser configuration for the user terminal 110.

As illustrated in Fig. 7A, the digital ID wallet provider 130 of the issuer side server is configured similarly to a computer for use as a common server, which plays a part of the VC provision and the settlement processing through the issuer side servers 140 to 150, the settlement provider 160 of the verifier side server, and the member shop side settlement terminal 170. To be more specific, in the digital ID wallet provider 130, a control unit 710, a main memory unit 712, an input unit 714, an output unit 716, a communication IF 718, and an auxiliary storage unit 720 are communicably connected to each other via a system bus 700. Note that, the components operate basically similarly to the respective components of the settlement provider 140; for this reason, details are not described again.

In the inside of the auxiliary storage unit 720, a VC verification request receiving unit 730, a VC verification unit 732, a transaction management unit 734, a verification VC selection unit 736, and a verification VP output unit 738 are each included. In a case where programs held in the components are loaded into the main memory unit 712 based on a calling instruction from the control unit 710, each application program structured by the loading executes processing of various computations that handle processing of various data related to the VC management and issuance.

In addition, the external server 750 is connected via the communication IF 718 as a component separated from the digital ID wallet provider 130. The VC data storage unit 760 is structured in outside 750 as a database, and the VC data storage unit 760 is formed to store the encryption key, the decryption key, and the encrypted VC of the holder.

More specifically, in a case where the VC verification request receiving unit 730 receives the request of the settlement VC from the member shop side settlement terminal 170 via the user terminal 110, the VC verification request receiving unit 730 receives the request as a request of settlement VC verification and outputs the settlement VP generated by the verification VC selection unit 736 to a VP-for-verification output unit 738. The VP-for-verification output unit 738 outputs the settlement VP to a communication IF unit 720 in order to transmit the settlement VP to the settlement terminal 170 via the user terminal 110. The VC verification unit 732 verifies the legitimacy of the holder by matching the public key provided from the user terminal 110 and the public key provided from the external server 750. In addition, the VC verification unit 732 verifies the legitimacy of the electronic signature corresponding to the encrypted VC provided from the external server 750 based on the public key of the holder provided from the user terminal 110.

Additionally, the transaction management unit 734 manages execution of a series of indivisible processing that is required for the VC verification and stores a processing result thereof into the VC data storage unit 760 in the external server 750. The verification VC selection unit 736 generates the settlement VP by selecting the credential included in the settlement VC while limiting the credential to the minimum required according to the settlement VC requested from the member shop side settlement terminal 170 via the user terminal 110.

In addition, the VC data storage unit 760 in the external server 750 stores, for example, a credential ID, a customer ID, an issuer ID, an encrypted VC, an electronic signature, a public key, a changing state, a changing date and time, an expiration date, and so on as the VC of the holder. Here, the VC data storage unit 760 holds, for example, an issuer identifier, an issuer and issuance service name, a settlement request recipient, a wallet address, an expiration date, and so on as a data configuration of the wallet account VC illustrated in Fig. 7B.

### [Internal Configuration Related to Digital Currency Wallet Provider Function of Holder Side User Terminal]

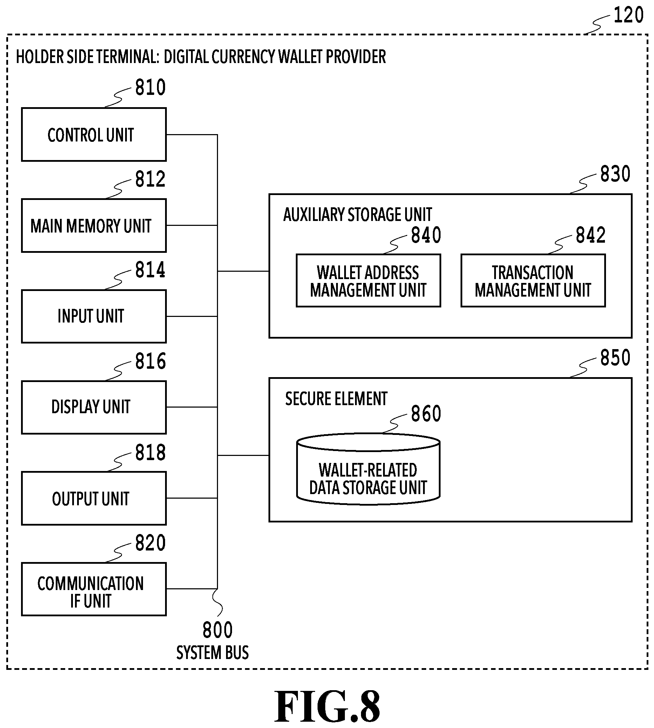

Fig. 8 is a configuration diagram illustrating an internal configuration related to a function of the digital currency wallet provider 120 of the holder side user terminal 110 in the settlement system illustrated in Fig. 1A. Here, the digital currency wallet provider 120 is formed as an application installed on the user terminal 110.

As illustrated in Fig. 8, the user terminal 110 is configured as a general-purpose mobile computer similarly to a common smartphone, which supports processing functions related to duties to verify a user signature for the settlement transaction requested from the issuer side server and determines approval/rejection of the signature. To be more specific, in the user terminal 110, a control unit 810, a main memory unit 812, an input unit 814, a display unit 816, an output unit 818, a communication IF 820, an auxiliary storage unit 830, and a secure element 850 are communicably connected to each other via a system bus 800. The components operate basically similarly to the respective components of the user terminal 110 in Fig. 6A; for this reason, details are not described again.

In the inside of the auxiliary storage unit 830, a wallet address management unit 840 and a transaction management unit 842 are each included. In a case where programs held in the components are loaded into the main memory unit 812 based on a calling instruction from the control unit 810, each application program structured by the loading executes processing of various computations that handle processing of various data related to settlement transaction VC management and issuance.

More specifically, the wallet address management unit 840 manages the wallet account VC data provided from the digital currency wallet provider 150 of the issuer side server and stores relevance information thereof into a wallet-related data storage unit 860. The transaction management unit 842 manages execution of a series of indivisible processing that is required for the management of the wallet address and stores a processing result thereof into the wallet-related data storage unit 860.

In addition, in response to the request from the digital currency wallet provider 150, the wallet address management unit 840 performs management, such as updating and canceling, of the wallet account VC of the holder saved in the wallet-related data storage unit 860 and stores relevance information thereof into the wallet-related data storage unit 860. Note that, the wallet-related data storage unit 860 stores, for example, a wallet address, a credential ID, an issuer ID, an encrypted VC, an electronic signature, a private key, a public key, a changing state, a changing date and time, an expiration date, and so on as the VC of the holder.

### [Internal Configuration of Settlement Provider of Verifier Side Server]

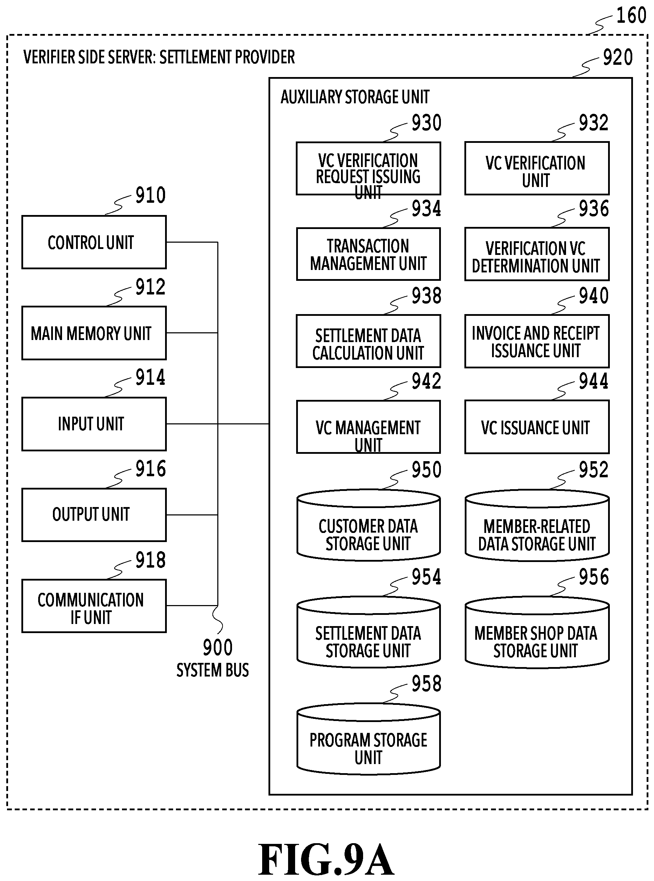

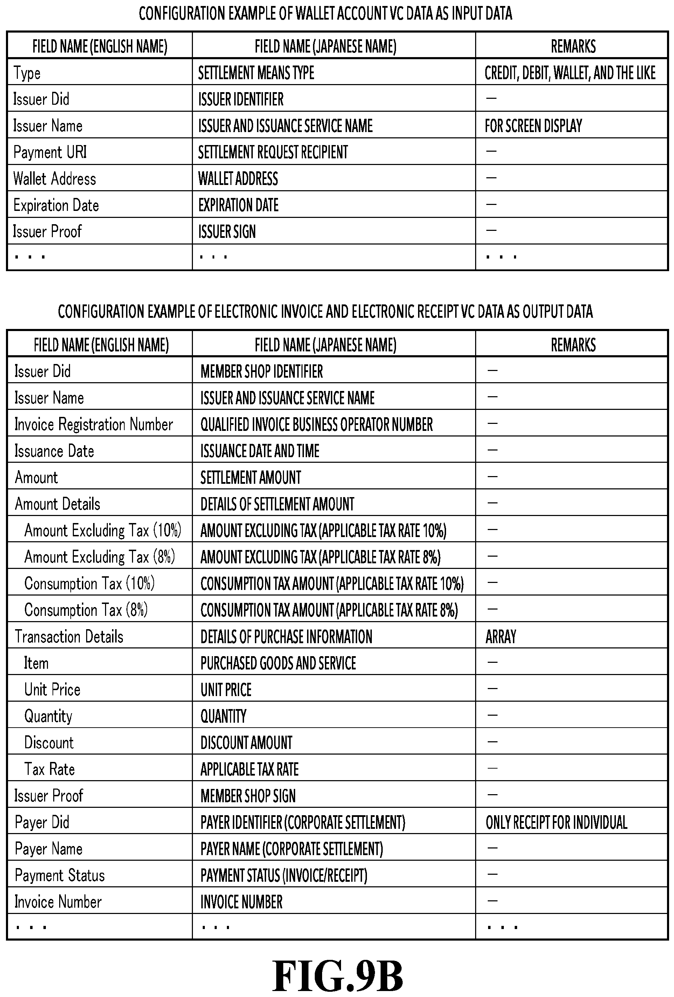

Fig. 9A is a configuration diagram illustrating an internal configuration of the settlement provider 160 of the verifier side server in the settlement system illustrated in Fig. 1A. Fig. 9B is a table illustrating each configuration example of the wallet account VC data (of settlement input data) and electronic invoice and electronic receipt VC data (of settlement output data) in the settlement provider 160 illustrated in Fig. 9A.

As illustrated in Fig. 9A, the settlement provider 160 of the verifier side server is configured similarly to a computer for use as a common server, which supports processing functions related to duties to perform the settlement processing by managing the VC verification of a holder 10 in the settlement scene. To be more specific, in the settlement provider 160, a control unit 910, a main memory unit 912, an input unit 914, an output unit 916, a communication IF 918, and an auxiliary storage unit 920 are communicably connected to each other via a system bus 900. The components operate basically similarly to the respective components of the issuer side servers 140 to 150; for this reason, details are not described again.

In the inside of the auxiliary storage unit 920, a VC verification request issuing unit 930, a VC verification unit 932, a transaction management unit 934, a verification VC determination unit 936, a settlement data calculation unit 938, an invoice and receipt issuance unit 940, a VC management unit 942, and a VC issuance unit 944 are each included. In a case where programs held in the components are loaded into the main memory unit 912 based on a calling instruction from the control unit 910, each application program structured by the loading executes processing of various computations that handle processing of various data related to the VC verification and the settlement.

Additionally, in the inside of the auxiliary storage unit 920, a customer data storage unit 950, a member-related data storage unit 952, a settlement data storage unit 954, a member shop data storage unit 956, and a program storage unit 958 are each included. In a case where data and programs saved in the components are loaded into the main memory unit 912 based on the calling instruction of the control unit 910, sub systems structured by the loading are used for processing of various computations that manage the data, the program, and the like in the form of a file/database.

More specifically, in a case where the VC verification request issuing unit 930 receives the request of the verification of the settlement VC from the member shop side settlement terminal 170, the VC verification request issuing unit 930 issues a request of VC signature verification to the user terminal 110 and transmits a verification result of the settlement VC generated by a verification VC determination unit 932 to the settlement terminal 170. The VC verification unit 932 verifies the electronic signature corresponding to the VC of the holder by using the public key of the holder obtained from the user terminal 110.

Additionally, the transaction management unit 934 manages execution of a series of indivisible processing that is required for the VC verification and the settlement processing and stores a processing result thereof into the settlement data storage unit 954. The verification VC determination unit 936 further verifies whether the settlement VC having the legitimacy verified by the VC verification unit 932 satisfies requirements required for the settlement processing and instructs a transition to the settlement processing. In a case where the settlement data calculation unit 938 receives the instruction from the verification VC determination unit 936, the settlement data calculation unit 938 stores an execution result of the settlement processing into the settlement data storage unit 954.

Moreover, the invoice and receipt issuance unit 940 issues the electronic invoice based on the execution result of the settlement processing stored in the settlement data storage unit 954 and transmits the electronic invoice to the holder side user terminal 110 via the member shop side settlement terminal 170. In addition, the invoice and receipt issuance unit 940 issues the electronic receipt based on the settlement result from the issuer side server and transmits the electronic receipt to the holder side user terminal 110 via the member shop side settlement terminal 170. The VC management unit 942 performs management, such as verification, updating, and canceling, of the VC-converted credential of the holder and stores relevance information thereof into the customer data storage unit 950. The VC issuance unit 944 transmits a verification result of the VC-converted credential of the holder to the holder side user terminal 110 via the member shop side settlement terminal 170.

Here, the customer data storage unit 950 stores, for example, a customer ID, a full name, an address, a phone number, an e-mail address, gender, a birth date, and so on as the registration information of the holder who is the customer. The member-related data storage unit 952 stores membership card information of the holder. The settlement data storage unit 954 stores settlement result information with input and output data of the settlement processing. The member shop data storage unit 956 stores member shop information concluding the member shop contract with the member shop management company. The program storage unit 958 stores programs to execute a series of processing executed as the transaction, other individual processing, or the like and receives calling for the programs from the control unit 910.

In addition, the settlement data storage unit 954 can perform, for example, a settlement means type, an issuer identifier, an issuer and issuance service name, a settlement request recipient, a wallet address, an expiration date, an issuer signature, and so on as illustrated in an upper table in Fig. 9B as the input data of the settlement processing. Additionally, the settlement data storage unit 954 stores, for example, a member shop identifier, an issuer and issuance service name, a qualified invoice business operator number, an issuance date and time, a settlement amount, detailed information of settlement amount, detailed information of purchase information, a member shop signature, a payer identifier (corporate settlement), a payer name (corporate settlement), a payment status (invoice/dragon receipt), an invoice number, and so on as illustrated in a lower table in Fig. 9B as the output data of the settlement processing.

### [Internal Configuration of Member Shop Side Settlement Terminal]

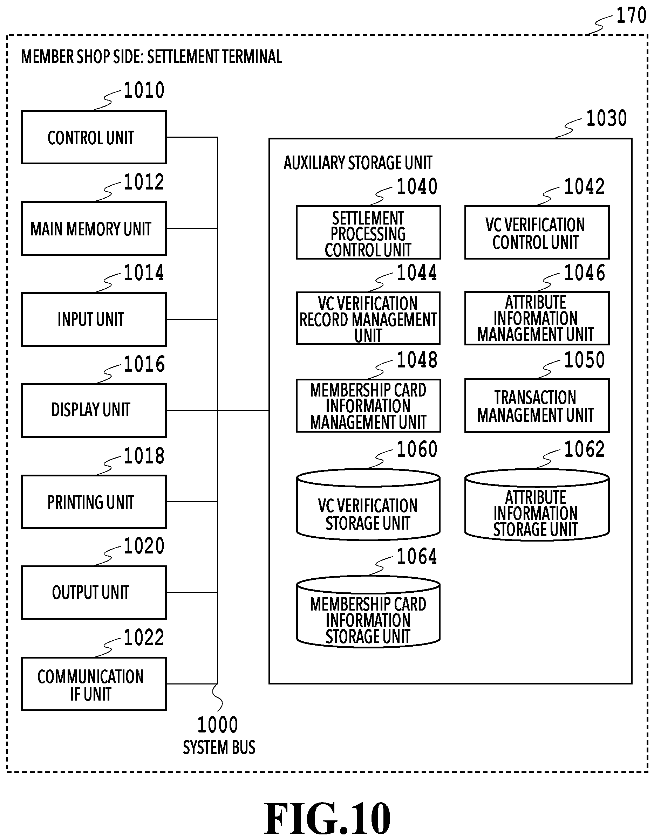

Fig. 10 is a configuration diagram illustrating an internal configuration of the member shop side settlement terminal 170 in the settlement system illustrated in Fig. 1A. As illustrated in Fig. 10, the settlement terminal 170 is configurated similarly to a computer for use for a technical client to support a function dedicated for the accounting processing of the retail sales and plays a part of the VC verification and the settlement processing of the holder in the settlement scene as a client of the settlement provider 160 of the verifier side server.

To be more specific, in the member shop side settlement terminal 170, a control unit 1010, a main memory unit 1012, an input unit 1014, a display unit 1016, a printing unit 1018, an output unit 1020, a communication IF 1022, and an auxiliary storage unit 1030 are communicably connected to each other via a system bus 1000. Except the display unit 1016 and the printing unit 1018, the components operate basically similarly to the respective components of the verifier side server 160; for this reason, details are not described again.

Here, the display unit 1016 displays an instruction received from the holder or the staff of the member shop or information that requires confirmation by that staff on a screen display. The printing unit 1018 outputs data of the settlement result to a built-in printer as a printing target; thus, a receipt indicating accounting details information, a receipt indicating the settlement result, or the like is discharged from a printer discharge port as a sheet that is cut for each transaction case.

In the inside of the auxiliary storage unit 1030, a settlement processing control unit 1040, a VC verification control unit 1042, a VC verification record management unit 1044, an attribute information management unit 1046, a membership card information management unit 1048, and a transaction management unit 1050 are each included. In a case where programs held in the components are loaded into the main memory unit 1012 based on a calling instruction from the control unit 1010, each application program structured by the loading executes processing of various computations that handle processing of various data related to the VC verification and the settlement.

Additionally, in the inside of the auxiliary storage unit 1030, a VC verification record storage unit 1060, an attribute information storage unit 1062, and a membership card information storage unit 1064 are each included. In a case where data and programs saved in the components are loaded into the main memory unit 1012 based on the calling instruction of the control unit 1010, sub systems structured by the loading are used for processing of various computations that manage the data, the program, and the like in the form of a file/database.

More specifically, in a case where the settlement processing control unit 1040 receives the settlement request inputted by the holder via various input interfaces, the settlement processing control unit 1040 transmits the settlement request to the settlement provider 160 of the verifier side server and thereafter notifies the holder and the staff of the member shop of the settlement result from the settlement provider 160 via each output interface. The VC verification control unit 1042 generates a verification request of the settlement VC of the holder inputted by the user terminal 110 via each input interface, transmits the verification request to the settlement provider 160, and receives a verification result from the settlement provider 160. The VC verification record management unit 1044 manages the verification result from the settlement provider 16 and stores only a verification result for which confirmation acceptance is executed in the corresponding member shop, out of execution records of the VC verification, into a VC verification storage unit 1060.

Additionally, the attribute information management unit 1046 manages identical person attribute information of the holder received from the user terminal 110 and additional attribute information directly inputted by the staff of the member shop and stores those pieces of attribute information into the attribute information storage unit 1062. In a case where the holder becomes a member utilizing the member shop, the membership card information management unit 1048 manages only the membership card information that is applied and accepted in the corresponding member shop and stores those pieces of information into the membership card information storage unit 1064. The transaction management unit 1050 manages execution of a series of indivisible processing that is required for the VC verification and the settlement processing and stores a processing result thereof into the VC verification storage unit 1060 and the attribute information storage unit 1062.

Here, the VC verification storage unit 1060 stores, for example, a credential ID, a customer ID, an issuer ID, an encrypted VC, an electronic signature, a public key, a verification result, a verification date and time, an expiration date, and so on as the VC verification result of the holder. The attribute information storage unit 1062 stores a customer ID, a full name, a birth date, gender, an address, a membership card number, a holding credential number, a registration method, a registration date, and so on as the identical person attribute information and the additional attribute information. The membership card information storage unit 1064 stores a membership card number, a customer ID, a credit card number, a registration method, a registration date, and so on as the membership card information.

### [Detailed Configuration of Settlement VP]

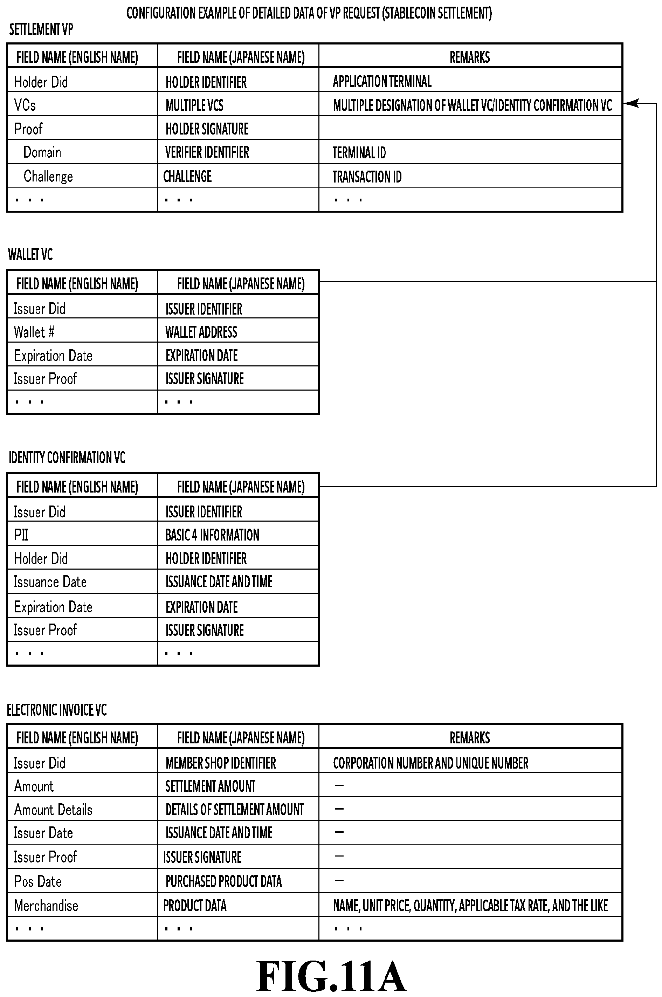

Fig. 11A is a table illustrating a configuration example of the settlement VP in the stablecoin settlement as detailed data of the VP request in the settlement system illustrated in Fig. 1A. The settlement VP illustrated in an upper table in Fig. 11A is generated by the holder side digital ID wallet provider 115 in the user terminal 110 and is thereafter transmitted to the settlement provider 160 of the verifier side server via the member shop side settlement terminal 170. Here, one settlement VP is formed so as to be able to be linked to multiple VC data and is each associated with a wallet VC and the identity confirmation VC. Additionally, an electronic invoice VC illustrated in a lower table in Fig. 11A is generated by the settlement provider 160 of the verifier side server and is thereafter transmitted to the holder side user terminal 110 via the member shop side settlement terminal 170. Note that, in the electronic invoice VC, an applicable tax rate and a consumption tax amount are each applied optimally.

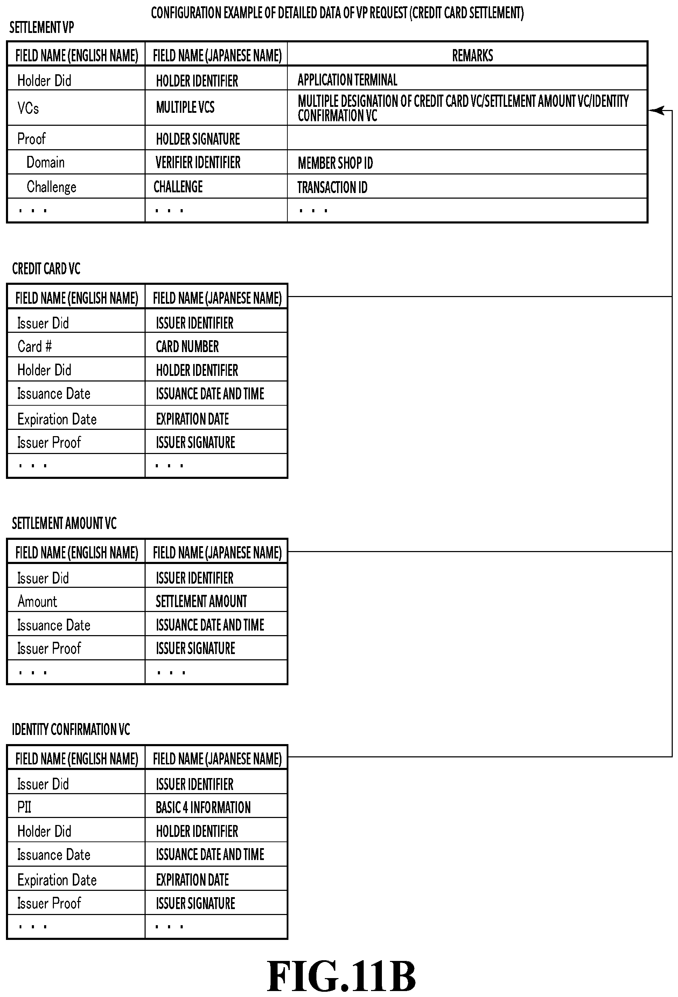

Fig. 11B is a table illustrating a configuration example of the settlement VP in the credit card settlement as detailed data of the VP request in the settlement system illustrated in Fig. 1A. The settlement VP illustrated in Fig. 11B is generated by the digital ID wallet provider 115 in the holder side user terminal 110 and is thereafter transmitted to the settlement provider 160 of the verifier side server via the member shop side settlement terminal 170. Here, one settlement VP is formed so as to be able to be linked to multiple VC data and is each associated with a credit card VC, a settlement amount VC, and the identity confirmation VC.

### [Various Processes of Settlement Processing (Online)]

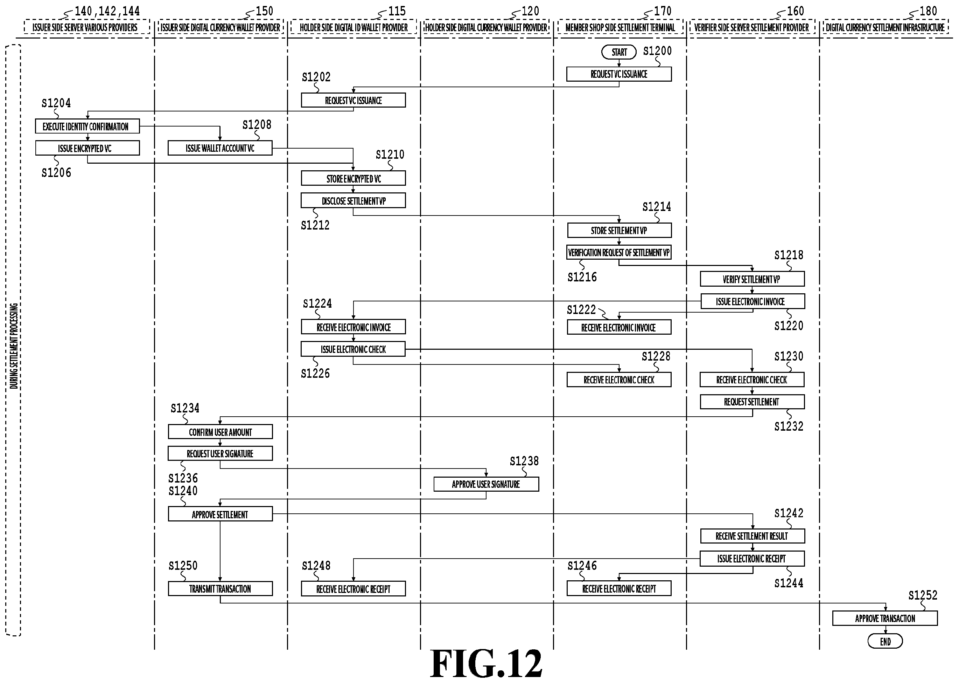

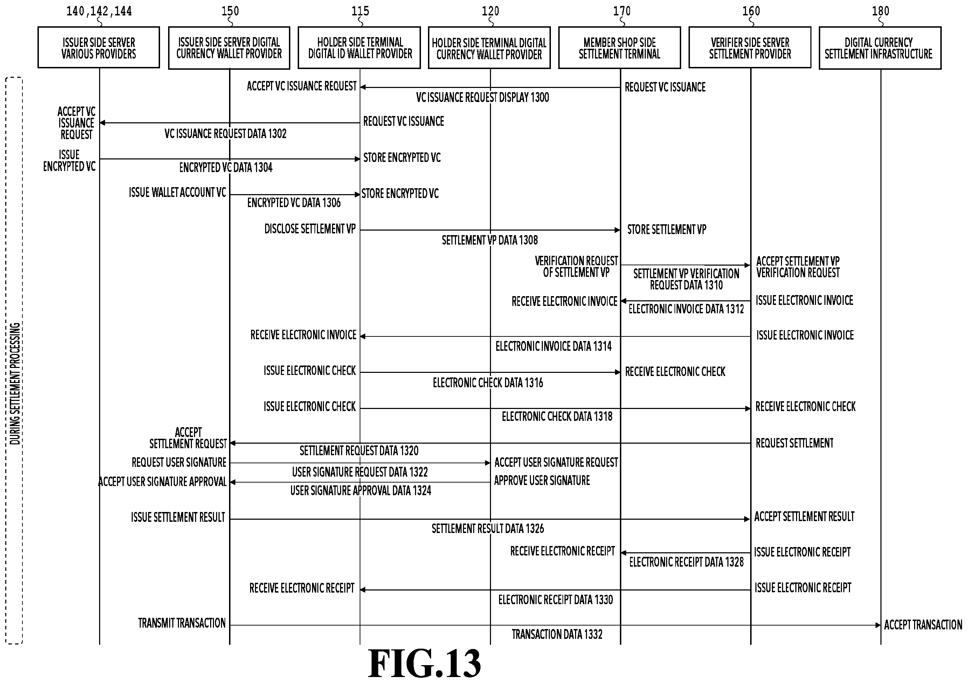

Regarding the various processes in the above-described settlement system, the settlement process is described below while assuming that the issuer, the holder, and the verifier are in an online state during the settlement processing. Fig. 12 is a flowchart illustrating the settlement process in the settlement system illustrated in Fig. 1A. Fig. 13 is a cooperation diagram illustrating respective flows of various data among various systems included in the settlement process illustrated in Fig. 12.

### (During VC Verification)

As a preliminary stage of the settlement in which the holder makes a purchase contract of the product/service in the member shop, the VC verification of the holder is executed. In a step S1200, in a case where the staff of the member shop receives the application of the settlement by the holder and instructs the settlement terminal 170 to start the settlement, the member shop side settlement terminal 170 requests the holder side user terminal 1100 to issue the settlement VC by VC issuance request data 1300. Subsequently, in a step S1202, in a case where the digital ID wallet provider 115 of the user terminal 110 receives the VC issuance request data 1300 from the settlement terminal 170, the digital ID wallet provider 115 of the user terminal 110 transmits VC issuance request data 1302 to the various providers 140 to 150 of the issuer side server.

Next, in a step S1204, in a case where the various providers 140, 142, and 144 of the issuer side server receive the VC issuance request data 1302 from the user terminal 110, for example, the various providers 140, 142, and 144 of the issuer side server execute the identity confirmation of the holder based on the public key of the holder. Subsequently, in a step S1206, in a case where a determination result of the identity confirmation of the holder is approval, the various providers 140, 142, and 144 of the issuer side server transmit various encrypted VC data 1304 by the private key of the holder to the user terminal 110 as the encrypted VC data. Subsequently, in a step S1208, in a case where a determination result of the identity confirmation of the holder is approval, the digital currency wallet provider 150 of the issuer side server transmits encrypted VC data 1306 related to the wallet account VC of the holder to the user terminal 110 as the encrypted VC data.

Next, in a step S1210, the digital ID wallet provider 115 of the user terminal 110 stores each encrypted VC received from the digital currency wallet provider 150 of the issuer side server into the VC data storage unit 660. Subsequently, in a step S1212, the digital ID wallet provider 115 transmits settlement VP data 1308 to the member shop side settlement terminal 170 based on a selection result of the settlement VC by the holder.

Next, in a step S1214, the member shop side settlement terminal 170 stores the settlement VP received from the user terminal 110 into the VC verification storage unit 1060. Subsequently, in a step S1216, the settlement terminal 170 transmits settlement VP verification request data 1310 to the settlement provider 160 of the verifier side server. Subsequently, in a step S1218, the settlement provider 160 stores the settlement VP verification request data 1310 received from the settlement terminal 170 into the settlement data storage unit 954.

### (During Settlement Processing)

Thereafter, as a stage of the settlement in which the holder makes the purchase contract of the product/service in the member shop, the settlement processing is executed between the holder and the member shop. Specifically, as illustrated in Figs. 12 and 13, in a step S1220, in a case where a verification result of the settlement VP received from the member shop side settlement terminal 170 is approval, the settlement provider 160 of the verifier side server transmits electronic invoice data 1312/1314 to the settlement terminal 170 or the user terminal 110. Subsequently, in a step S1222, the settlement terminal 170 stores the electronic invoice data 1312 received from the settlement provider 160 into the VC verification storage unit 1060 and transmits the electronic invoice data 1314 to the user terminal 110.

Next, in a step S1224, the digital ID wallet provider 115 of the user terminal 110 stores the electronic invoice data 1314 received from the settlement provider 160 of the verifier side server or the member shop side settlement terminal 170 into the VC data storage unit 660. Subsequently, in a step S1226, the digital ID wallet provider 115 transmits electronic check data 1316/1318 corresponding to the electronic invoice data 1314 to the settlement provider 160 or the settlement terminal 170.

Next, in a step S1228, the member shop side settlement terminal 170 stores the electronic check data 1316 received from the user terminal 110 into the VC verification storage unit 1060 and transmits electronic invoice data 1318 to the settlement provider 160 of the verifier side server. Subsequently, in a step S1230, the settlement provider 160 stores the electronic invoice data 1318 received from the user terminal 110 or the settlement terminal 170 into the settlement data storage unit 954.

Next, in a step S1232, the settlement provider 160 of the verifier side server identifies the settlement means (for example, the credit card settlement, the stablecoin settlement, and the like) based on the electronic invoice data 1318 and thereafter transmits settlement request data 1320 to the digital currency wallet provider 150 of the issuer side server. Subsequently, in a step S1234, the digital currency wallet provider 150 confirms a user balance in the wallet account of the holder based on the settlement request data 1320 received from the settlement provider 160, and in a case where the balance exceeds the settlement amount, settlement transaction data is generated.

Next, in a step S1236, the digital currency wallet provider 150 of the issuer side server transmits user signature request data 1332 for the newly generated settlement transaction data to the user terminal 110. Subsequently, in a step S1238, the digital currency wallet provider 120 of the user terminal 110 verifies the authenticity of the user signature request data 1332 received from the digital currency wallet provider 150 and thereafter, in a case where the verification of the user signature request data 1332 is approval, the digital currency wallet provider 120 of the user terminal 110 transmitted user signature approval data 1324 to the digital currency wallet provider 150.

Next, in a step S1240, the digital currency wallet provider 150 of the issuer side server transmits settlement result data 1326 to the settlement provider 160 of the verifier side server based on the user signature approval data 1324 received from the user terminal 110. Subsequently, in a step S1242, the settlement provider 160 stores the settlement result data 1326 received from the digital currency wallet provider 150 into the settlement data storage unit 954 and transmits electronic receipt data 1328/1330 to the member shop side settlement terminal 170 or the user terminal 110.

Next, in a step S1246, the member shop side settlement terminal 170 stores the electronic receipt data 1328 received from the settlement provider 160 of the verifier side server into the VC verification storage unit 1060 and transmits the electronic receipt data 1330 to the user terminal 110. Subsequently, in a step S1248, the user terminal 110 stores electronic invoice data 1330 received from the settlement provider 160 or the settlement terminal 170 into the VC data storage unit 760.

Next, in a step S1250, the digital currency wallet provider 150 of the issuer side server locks the user balance in the wallet account of the holder (unlocking is after the registration of the transaction on the blockchain network) and thereafter transmits settlement transaction data 1332 to the digital currency settlement infrastructure 180. Subsequently, in a step S1252, the digital currency settlement infrastructure 180 saves a transaction record of a crypto-asset as a transaction and the accompanied transaction information (invoice and receipt) on the same chain based on the settlement transaction data 1332 received from the digital currency wallet provider 150.

### [Effect of Embodiment]

Thus, according to the embodiment of the present invention, it is possible to provide a service user, such as a business operator, a user, and a regulatory authority, with on-chain DVP (Delivery Versus Payment) settlement, which makes it possible to provide transparency guaranteed of transaction contents and improvement of the convenience of a consumer, by saving a transaction record of a crypto-asset as a transaction and the accompanied transaction information on the same chain after the transaction information (invoice and receipt) is converted into a VP, on a digital currency settlement infrastructure.

In the above, although the principle of the present invention is described with reference to the exemplary embodiment, those of skill in the art have to understand that it is possible to implement various embodiments that have a change in a configuration and detail without departing from the intent and the scope of the present invention. In other words, the present invention can take various embodiments as, for example, a system, an apparatus, a method, a program, a storage medium, or the like.

### Reference Signs List

- 100: communication line
- 110: user terminal
- 115: holder side terminal: digital ID wallet provider
- 120: holder side terminal: digital currency wallet provider
- 130: issuer side server: digital ID wallet provider
- 140: issuer side server: settlement provider
- 142: issuer side server: identity confirmation provider
- 144: issuer side server: point member provider
- 150: issuer side server: digital currency wallet provider
- 160: verifier side server: settlement provider
- 170: member shop side settlement terminal
- 180: digital currency settlement infrastructure
- 200: system bus
- 210: control unit
- 212: main memory unit
- 214: input unit
- 216: output unit
- 218: communication IF unit
- 220: auxiliary storage unit
- 230: VC management unit
- 232: VC issuance unit
- 234: transaction management unit
- 236: customer data management unit
- 238: limit amount management unit
- 240: VC encryption unit
- 250: customer data storage unit
- 252: card-related data storage unit
- 254: VC management data storage unit
- 256: program storage unit
- 300: system bus
- 310: control unit
- 312: main memory unit
- 314: input unit
- 316: output unit
- 318: communication IF unit
- 320: auxiliary storage unit
- 330: VC management unit
- 332: VC issuance unit
- 334: transaction management unit
- 336: customer data management unit
- 338: VC encryption unit
- 350: customer data storage unit
- 352: identical person-related data storage unit
- 354: VC management data storage unit
- 356: program storage unit
- 400: system bus
- 410: control unit
- 412: main memory unit
- 414: input unit
- 416: output unit
- 418: communication IF unit
- 420: auxiliary storage unit
- 430: VC management unit
- 432: VC issuance unit
- 434: transaction management unit
- 436: customer data management unit
- 438: VC encryption unit
- 450: customer data storage unit
- 452: member-related data storage unit
- 454: VC management data storage unit
- 456: program storage unit
- 500: system bus
- 510: control unit
- 512: main memory unit
- 514: input unit
- 516: output unit
- 518: communication IF unit
- 520: auxiliary storage unit
- 530: VC management unit
- 532: VC issuance unit
- 534: transaction management unit
- 536: customer data management unit
- 538: VC encryption unit
- 550: customer data storage unit
- 552: wallet-related data storage unit
- 554: VC management data storage unit
- 556: program storage unit
- 600: system bus
- 610: control unit
- 612: main memory unit
- 614: input unit
- 616: display unit
- 618: output unit
- 620: communication IF unit
- 630: auxiliary storage unit
- 640: VC management unit
- 642: VC issuance unit
- 644: transaction management unit
- 646: customer data management unit
- 648: verification VP output unit
- 650: secure element
- 660: VC data storage unit
- 700: system bus
- 710: control unit
- 712: main memory unit
- 714: input unit
- 716: output unit
- 718: communication IF unit
- 720: auxiliary storage unit
- 730: VC verification request reception unit
- 732: VC verification unit
- 734: transaction management unit
- 736: verification VC selection unit
- 738: verification VP output unit
- 750: external server
- 760: VC data storage unit
- 800: system bus
- 810: control unit
- 812: main memory unit
- 814: input unit
- 816: display unit
- 818: output unit
- 820: communication IF unit
- 830: auxiliary storage unit
- 840: wallet address management unit
- 842: transaction management unit
- 850: secure element
- 860: wallet-related data storage unit
- 900: system bus
- 910: control unit
- 912: main memory unit
- 914: input unit
- 916: output unit
- 918: communication IF unit
- 920: auxiliary storage unit
- 930: VC verification releasing unit
- 932: VC verification unit
- 934: transaction management unit
- 936: verification VC determination unit
- 938: settlement data calculation unit
- 940: invoice and receipt issuance unit
- 942: VC management unit
- 944: VC issuance unit
- 950: customer data storage unit
- 952: member-related data storage unit
- 954: settlement data storage unit
- 956: member shop data storage unit
- 958: program storage unit
- 1000: system bus
- 1010: control unit
- 1012: main memory unit
- 1014: input unit
- 1016: display unit
- 1018: printing unit
- 1020: output unit
- 1022: communication IF unit
- 1030: auxiliary storage unit
- 1040: settlement processing control unit
- 1042: VC verification control unit
- 1044: VC verification record management unit
- 1046: attribute information management unit
- 1048: membership card information management unit
- 1050: transaction management unit
- 1060: VC verification storage unit
- 1062: attribute information storage unit
- 1064: membership card information storage unit

## Claims

1. A settlement system for making settlement of a sales contract between a holder and a member shop based on a verification result by a verifier for a credential provided from the holder in the member shop having a member shop contract with the verifier, as a settlement scene between an issuer having a business contract with a settlement brand, the holder who is a member of the settlement brand, and the verifier having a transaction contract with the settlement brand, the settlement system comprising:
a first settlement provider disposed on the issuer side and configured to determine issuance to provide the credential to a user terminal used by the holder as a verifiable credential (VC) based on a request from the user terminal;
a digital ID wallet provider configured to manage the VC issued from the first settlement provider based on an instruction from the user terminal and issue an encrypted verifiable presentation (VP) generated from the VC based on an instruction from the user terminal;
a settlement terminal disposed in the member shop and configured to request settlement processing for the sales contract based on a verification result of the encrypted VP issued from the digital ID wallet provider;
a second settlement provider disposed on the verifier side and configured to verify the VP provided from the settlement terminal and thereafter issue a settlement request so as to execute the settlement processing requested from the settlement terminal; and
a first digital currency wallet provider disposed on the issuer side and configured to generate a settlement transaction based on the settlement request issued from the second settlement provider and transmit the settlement transaction to a digital currency settlement infrastructure, wherein
the settlement transaction is a transaction formed so that a transaction record of the sales contract associated with the encrypted VP and the transaction information accompanying the transaction record can be registered with the digital currency settlement infrastructure.

2. The settlement system according to claim 1, wherein
the digital ID wallet provider is configured as a part of an agent application for settlement service installed on the user terminal and manages the VC by utilizing a secure element built in the user terminal, or is configured as a server disposed on the issuer side and manages the VC by utilizing a database in an external server separated from the server.

3. The settlement system according to claim 1, wherein
the first settlement provider is configured as a server group disposed on the issuer side, and the server group comprises a settlement provider, an identity confirmation provider, and a point member provider that are configured to issue a credit card account VC, an identity confirmation VC, and a point member VC associated with the holder to the digital ID wallet provider, respectively, and
the first digital currency wallet provider is configured to issue a wallet account VC associated with a digital currency account of the holder that is issued from the digital currency settlement infrastructure to the digital ID wallet provider.

4. The settlement system according to claim 3, wherein
the digital ID wallet provider issues an electronic check to the second settlement provider as the encrypted VP via the user terminal, and the electronic check includes the wallet account VC, the identity confirmation VC, and the point member VC associated with the sales contract.

5. The settlement system according to claim 1, wherein
the second settlement provider issues an electronic invoice to the digital ID wallet provider as an encrypted VP, and the electronic invoice includes an identifier and a signature of the member shop, a settlement amount of the sales contract, purchase target data of the sales contract, an applicable tax rate and a consumption tax amount for the purchase target data, and a qualified invoice business operator number.

6. The settlement system according to claim 1, wherein
the second settlement provider issues an electronic receipt to the digital ID wallet provider as an encrypted VP, and the electronic receipt includes an identifier and a signature of the member shop, a settlement amount of the sales contract, purchase target data of the sales contract, an applicable tax rate and a consumption tax amount for the purchase target data, and a qualified invoice business operator number.

7. The settlement system according to claim 1, further comprising:
a second digital currency wallet provider configured as a part of an agent application for settlement service installed on the user terminal and configured to verify authenticity of the settlement transaction based on a signature request issued from the first digital currency wallet provider and approve a user signature of the holder based on a verification result of the settlement transaction.

8. The settlement system according to claim 1, wherein
the digital currency settlement infrastructure is a settlement infrastructure to maintain an accurate financial transaction history based on a distributed ledger technology using blockchain, and the distributed ledger technology stores transaction histories, in the unit called block, linking them together as a single chain from past to present using a cryptographic techniques.

9. The settlement system according to claim 1, wherein
the digital currency settlement infrastructure is a platform to utilize a digital currency, including any one of a stablecoin, a central bank digital currency, or tokenized deposits, for settlement.

10. A settlement method for executing settlement processing of a sales contract in a settlement system, which handles the sales contract between a holder and a member shop based on a verification result by a verifier for a credential provided from the holder in the member shop having a member shop contract with the verifier, as a settlement scene between an issuer having a business contract with a settlement brand, the holder who is a member of the settlement brand, and the verifier having a transaction contract with the settlement brand, the settlement method comprising:
determining, in a first settlement provider disposed on the issuer side, issuance to provide the credential to a user terminal used by the holder as a verifiable credential (VC) based on a request from the user terminal;
issuing, in a digital ID wallet provider that manages the VC issued from the first settlement provider based on an instruction from the user terminal, an encrypted verifiable presentation (VP) generated from the VC based on an instruction from the user terminal;
requesting, in a settlement terminal disposed in the member shop, verification of the encrypted VP issued from the digital ID wallet provider;
verifying, in a second settlement provider disposed on the verifier side, the VP provided from the settlement terminal and providing a verification result of the VP to the settlement terminal;
requesting, in the settlement terminal, settlement processing for the sales contract based on a verification result of the VP provided from the second settlement provider;
issuing, in the second settlement provider, a settlement request so as to execute the settlement processing requested from the settlement terminal; and
generating, in a first digital currency wallet provider disposed on the issuer side, a settlement transaction based on the settlement request issued from the second settlement provider and transmitting the settlement transaction to a digital currency settlement infrastructure, wherein
the settlement transaction is a transaction formed so that a transaction record of the sales contract associated with the encrypted VP and the transaction information accompanying the transaction record can be registered with the digital currency settlement infrastructure.
